# EUROPEAN PATENT APPLICATION

(11) **EP 4 755 479 A1**
(43) Date of publication of application: **10.06.2026**
(21) Application number: 25220478.9
(22) Date of filing: 03.12.2025
(51) Int. Cl.: A63F 3/00, A63F 9/24

(54) **DECRYPTOR DEVICE**

(30) Priority: 03.12.2024 CN 202411768129
(71) Applicant: FS Giiker Technology Co., Ltd., Guangdong 528311 (CN)
(72) Inventor: SU, Ziming, Guangdong (CN); LI, Changping, Guangdong (CN); JIAN, Jinyao, Guangdong (CN); ZHOU, Juncheng, Guangdong (CN)
(74) Representative: EIP

(57) **Abstract**

A decryptor device configured for a user to solve a preset set of secret codes, the preset set of secret codes including a plurality of secret codes selected from a given code set, the given code set including a plurality of given codes that are different from each other, the decryptor device comprising: a housing; a power supply module; a main control module; a code input module electrically connected to the power supply module and communicatively connected to the main control module, the code input module configured to input at least a solution code set, the number of solution codes included in the solution code set is the same as the number of secret codes included in the preset set of secret codes, and the solution codes are selected from a given code set; a display module electrically connected with the power supply module and communicatively connected with the main control module, the display module including at least one set of display units, the display module being configured to operate in association with the code input module when the code input module operates to input answers so that each set of display units displays a corresponding set of solution codes.

## Description

### TECHNICAL FIELD

The present disclosure relates to the field of decryption game products, and more specifically to a decryptor device.

### BACKGROUND

Decryption games are puzzle games. Prior art decryption game products, such as mastermind or miracle chess, require the use of a separate board and multi-colored chess pieces or beads separated from the board, and may also require a theme book. Both the chess pieces or beads and theme book are easy to lose, and it is extremely inconvenient to carry around, and the game cannot be played anytime and anywhere, because the game requires certain field conditions, which limits the use of decryption game products. In addition, there is no man-machine interaction function in the prior art decrypted game products, so that the user is easily boring and cannot maintain the user's interest for a long time. These problems lead to poor user experience and low satisfaction.

In order to solve at least one of the problems of the prior art, it is necessary to propose a completely new decryptor device, which does not use physical chess pieces or beads or a roster, is easy to carry, and has no restrictions on usage scenarios. Besides, it has simple structure, compact structure, low cost, excellent human-computer interaction, and can promote user interest, improve user experience and user satisfaction.

### SUMMARY

To this end, the present disclosure proposes a decryptor device configured for a user to answer a question, the question being a preset set of secret codes, the preset set of secret codes including a plurality of secret codes selected from a given code set, the given code set including a plurality of given codes that are different from each other, the decryptor device including:
a housing;
a power supply module;
a main control module electrically connected with the power supply module;
a code input module is provided on the housing, the code input module is electrically connected to the power supply module and communicatively connected to the main control module, the code input module is configured to input at least answers, and the answers are a set of solution codes, the number of solution codes included in the set of solution codes is the same as the number of secret codes included in the preset set of secret codes, and the solution codes are selected from the given code set;
a display module is provided on the housing, the display module is electrically connected to the power supply module and communicatively connected to the main control module, the display module includes at least one set of display units, the display module is configured to When the code input module operates to input the answer, operate in association with the code input module so that each set of display units displays a corresponding solution code set.

According to different embodiments, the decryptor device proposed by the present disclosure may comprise one or more of the following further developments.

In some embodiments, each set of display units includes a plurality of display units, each display unit including at least one display light element.

In some embodiments, each display unit in each set of display units is configured to display a solution code.

In some embodiments, each of the preset set of secret codes includes a positional sequential relationship between the plurality of secret codes.

In some embodiments, the plurality of display units of each set of display units are positioned sequentially such that positional sequential relationships between the plurality of display units of each set of display units reflect positional sequential relationships between the plurality of solution codes of the solution code set.

In some embodiments, the code content of said given code is represented by at least one of a color, a number, a letter, a text, a pattern.

In some embodiments, the display light element is disposed on the circuit board of the main control module.

**In** some embodiments, the main control module is configured to provide the preset set of secret codes.

**In** some embodiments, the main control module is configured to control the display module to display the input solution code in response to the code input module operating to input the solution code.

**In** some embodiments, the code input module includes: a code selection unit configured to select a given code from the given code set as the solution code; and a code input unit configured to input the selected given code as a solution code to said main control module.

**In** some embodiments, the code input unit is configured to be communicatively connected with the main control module, wherein the main control module is configured to control the corresponding display unit to display the input solution code in response to the code input unit operating.

**In** some embodiments, the code selection unit is configured to include a knob, and/or the code input unit is configured as a push button.

**In** some embodiments, the knob is configured to include a plurality of gears and is rotatable to switch between the plurality of gears, each gear corresponding to a solution code setting; the knob is configured to be in communication connection with the main control module, wherein the main control module is configured to control the corresponding display unit to synchronously display the solution code corresponding to each gear in response to the knob switching between the gears.

**In** some embodiments, the decryptor device comprises a code entry module.

**In** some embodiments, the code input module is located in a corner of the housing.

**In** some embodiments, the code input module is configured as a touch screen.

**In** some embodiments, the code input module is further configured to input the preset set of secret codes.

**In** some embodiments, the decryptor device is configured such that each game session includes a questioning sub-phase and an answering sub-phase; the code input module and the display module are configured to be communicatively connected with the main control module; wherein: in the questioning sub-phase, the code input module is configured to input the preset set of secret codes into the main control module; in the answering sub-phase, the code input module is configured to input the solution code set to the main control module, and the main control module is configured to control the display module to display the input solution code in response to the code input module operating to input the solution code.

In some embodiments, the code input module includes a code selection unit and a code input unit; wherein: in the questioning sub-phase, the code selection unit is configured to select a given code from the given code set as a secret code, and the code input unit is configured to input the selected given code as a secret code into the main control module; in the answering sub-phase, the code selection unit is configured to select a given code from the given code set as a solution code, and the code input unit is configured to input the selected given code as a solution code into the Main control module.

In some embodiments, the code input unit is configured to be communicatively connected with the main control module, wherein, in the answering sub-phase, the main control module is configured to control the corresponding display unit to display the input solution code in response to the operation of the code input unit.

In some embodiments, the code selection unit is configured to include a knob, and/or the code input unit is configured as a push button.

In some embodiments, the knob is configured to include a plurality of gears and is rotatable to switch between the plurality of gears, each gear corresponding to a solution code setting; the knob is provided in communicative connection with the main control module; wherein, at least in the answering sub-phase, the main control module is configured to control the corresponding display unit to synchronously display the solution code corresponding to each gear in response to the knob switching between the gears.

In some embodiments, the main control module is further configured to compare the input solution code set with the preset set of secret codes and give a comparison result.

In some embodiments, the decryptor device further includes a solution result indication module, the solution result indication module is electrically connected to the power supply module and is configured to provide a comparison result indication regarding the comparison result.

In some embodiments, the solution result indication module is configured to be communicatively connected to the main control module, wherein the main control module is configured to control the solution result indication module to provide the comparison result indication based on the comparison result.

In some embodiments, the solution result indication module includes an indicator light element.

In some embodiments, the indicator light element is disposed on the circuit board of the main control module.

In some embodiments, the solution result indication module is configured to indicate the comparison result through at least one of color, brightness, pattern, and flashing pattern of the indicator light element.

In some embodiments, the solution result indication module is configured to provide a comparison result including at least one of the following information:
whether the solution code set is consistent with the preset set of secret codes;
the number and/or location of completely correct solution codes included in the solution code set;
the number and/or location of partially correct solution codes included in the set of solution codes;
the number and/or location of error solution codes included in the set of solution codes;
wherein: the completely correct solution code is a solution code whose position sequence relationship and code content correspond to the preset set of secret codes; a partially correct solution code is a solution code whose position sequence relationship does not correspond to the preset set of secret codes and whose code content is included in the preset set of secret codes; the error solution code is a solution code whose position sequence relationship and code content do not correspond to the preset set of secret codes.

In some embodiments, the solution result indication module includes a first indicator light unit provided corresponding to each display unit, the first indicator light unit includes the indicator light element and is configured to provide the comparison result indication.

In some embodiments, the first indicator light unit is configured to provide completely correct indication information when the position sequence relationship and code content of the solution code displayed by the corresponding display unit are consistent with the secret code in the preset set of secret codes; and/or provide error indication information when the solution code displayed by the corresponding display unit does not match the positional sequential relationship and code content of the secret code in the preset set of secret codes; and/or providing partially correct indication information when the code content of the solution code displayed by the corresponding display unit is included in the preset set of secret codes, but the positional sequential relationship is not consistent with the preset set of secret codes.

In some embodiments, the first indicator light unit is disposed near the corresponding display unit.

In some embodiments, the first indicator light unit is disposed above, below, or beside the corresponding display unit.

In some embodiments, the first indicator light unit is further configured to provide a solution code input digit indication for indicating which digit of the solution code to be input is in the corresponding solution code set.

In some embodiments, the main control module is configured to control the corresponding first indicator light unit to provide the comparison result indication in response to the code input module operating to input the last solution code in the solution code set.

In some embodiments, the solution result indication module includes a second indicator light unit provided corresponding to each set of display units, the second indicator light unit includes the indicator light element and is configured to provide the comparison result indication.

In some embodiments, each of the second indicator light units comprises a plurality of sub-units, each of the sub-units comprising one or more of the indicator light elements, the plurality of sub-units configured to provide the indication of the result of the comparison.

In some embodiments, the plurality of sub-units are disposed proximate to each other.

In some embodiments, the plurality of sub-units are arranged in rows and/or columns, or in a circle.

In some embodiments, each of the sub-units is configured to provide an indication of a comparison result in relation to one of the entered set of solution codes.

In some embodiments, the comparison result indication provided by the second indicator light unit includes: the number of completely correct solution codes in the solution code set; and/or the number of partially correct solution codes in the set of solution codes; and/or the number of error solution codes in the set of solution codes.

In some embodiments, each set of display units is arranged in columns or rows, and the second indicator light unit is disposed at the beginning or end of the columns or rows.

In some embodiments, the main control module is configured to control the corresponding second indicator light unit to provide the comparison result indication in response to the code input module operating to input the last solution code in the solution code set.

In some embodiments, the display module includes multiple sets of display units.

In some embodiments, the plurality of sets of display units are configured such that each set of display units keeps displaying the corresponding solution code set after starting to display the corresponding solution code set until the end of the corresponding game round.

In some embodiments, the decryptor device is configured such that the end of the game session corresponds to at least one of the following events: the input solution code set is consistent with the preset set of secret codes; the same number of solution code sets as the number of groups of the plurality of sets of display units is input; the game time has reached a predetermined time period; the number of times the solution code set was entered reached the preset number.

In some embodiments, the plurality of sets of display units are arranged such that each set of display units, after starting to display the corresponding set of solution codes, keeps displaying the fully correct codes and/or partially correct codes in the corresponding set of solution codes until the end of the corresponding game session.

In some embodiments, the plurality of sets of display elements are arranged in an array of display elements, wherein each set of display elements is arranged in rows or columns.

In some embodiments, the main control module is configured to control a subsequent set of display units to automatically display the completely correct code in the previously input solution code set based on the comparison result, and the completely correct solution code is the position sequence relationship and Solution codes whose code contents correspond to the preset set of secret codes.

In some embodiments, the main control module is configured to control each set of display units in the plurality of sets of display units to keep displaying the corresponding solution code set until the end of the corresponding game link after starting to display the corresponding solution code set.

In some embodiments, the main control module is configured to control each set of display units in the plurality of sets of display units to keep displaying the completely correct code and/or in the corresponding solution code set after starting to display the corresponding solution code set. Partially correct code until the end of the corresponding game session.

In some embodiments, the main control module is configured to control the first indicator light unit to keep displaying the comparison result indication until the end of the corresponding game session after starting to provide the comparison result indication.

In some embodiments, the main control module is configured to control the second indicator light unit to keep displaying the comparison result indication until the end of the corresponding game link after starting to provide the comparison result indication.

In some embodiments, the display module is further configured to provide a comparison result indication regarding a comparison result between the solution code set and the preset set of secret codes.

In some embodiments, at least one display light element of each set of display units is configured to provide an indication of the comparison.

In some embodiments, the display light elements of each set of display units are configured to provide an indication of the comparison result through at least one of displayed color, brightness, pattern, and flashing pattern.

In some embodiments, the main control module is configured to control the display module to provide the comparison result indication in response to the code input module operating to input the last solution code in the set of solution codes.

In some embodiments, the first indicator light unit is further configured to provide a solution code input digit indication for indicating which digit of the solution code to be input is in the corresponding solution code set.

In some embodiments, the main control module is configured to activate the input of the next solution code in response to the input of the solution code in one solution code set before completing the input of the solution code set.

In some embodiments, the main control module is configured to, before completing the input of a solution code set, control the corresponding first indicator light unit to provide the solution code input digit indication in response to the input of one solution code in the solution code set.

In some embodiments, the comparison result indication and the solution code input digit indication are distinguished by at least one difference in color, pattern, brightness or flashing pattern displayed by the corresponding first indicator light units.

In some embodiments, the decryptor device further comprises a digit selector configured to select an input digit of the solution code to be input, the input digit indicating which digit of the corresponding set of solution codes the solution code to be input is in.

In some embodiments, the digit selector is configured to select an input digit of the solution code to be input by activating a display element of a corresponding set of display elements; wherein the plurality of display units of each set of display units are positioned sequentially such that a positional sequential relationship between the plurality of display units of each set of display units reflects a positional sequential relationship between the plurality of solution codes of the solution code set.

In some embodiments, the digit selector is provided in communicative connection with the main control module; wherein the master control module is configured to activate an input of a solution code of a corresponding digit in response to an input digit selection operation of the digit selector.

In some embodiments, the code input module is configured to be operable in association with the activated display unit, so that when a solution code is input using the code input module, the activated display unit displays the input solution code or the input solution code overlays the solution code previously displayed by the activated display unit.

In some embodiments the decryptor device further comprises a solution code input digit indication module configured to provide a solution code input digit indication to indicate which digit of the corresponding set of solution codes the solution code to be input is.

In some embodiments, the solved code input digit indication module includes a digit indicator light unit provided corresponding to each display unit, the digit indicator light unit including one or more digit indicator light elements.

In some embodiments, the digit indicator light units are disposed adjacent the corresponding display units.

In some embodiments, the digit indicator light units are disposed above or below or alongside the corresponding display units.

In some embodiments, the solution code input digit indication module is configured to provide the solution code input digit indication by at least one of a color, a brightness, a pattern, a blinking pattern of the digit indicator light elements.

In some embodiments, the digit selector is provided in communicative connection with the main control module; wherein the main control module is configured to control the digit indicator light unit corresponding to the display unit of the corresponding digit to provide the solution code input digit indication in response to the input digit selection operation of the digit selector.

In some embodiments, the display unit is further configured to provide a solution code input digit indication for indicating which digit of the solution code to be input is in the corresponding solution code set.

In some embodiments, the solution code input digit indication is provided by at least one of color, brightness, pattern, and blinking pattern of display light elements of the corresponding display unit.

In some embodiments, the decryptor device further includes an answer submitter disposed on the housing and communicatively connected to the main control module, the answer submitter operable to submit the set of solution codes to the main control module.

In some embodiments, the answer submitter is configured as a button.

In some embodiments, the answer submitter is shared with at least a portion of the code input module.

In some embodiments, the main control module is configured to control the corresponding first indicator light unit to provide the comparison result indication in response to submission of the solution code set.

In some embodiments, the main control module is configured to control the corresponding second indicator light unit to provide the comparison result indication in response to submission of the solution code set.

In some embodiments, the main control module is configured to activate the next set of display units in response to submission of the set of solution codes before the end of the game session.

In some embodiments, the main control module is configured to control the display module to automatically display at least one automatic solution code set before inputting the solution code set via the code input module, and control the solution result indication module to provide information about the A comparison result indication of a comparison result between at least one automatic solution code set and the preset set of secret codes.

In some embodiments, the code contents of the plurality of secret codes of the preset set of secret codes are set not to overlap with each other.

In some embodiments, the main control module is configured to determine whether the currently input solution code is the same as the previously input solution code during the process of the code input module operating to input one of the solution code sets.

In some embodiments, the main control module is configured to eliminate the previously input solution code or give an error input indication when it is determined that the currently input solution code is the same as the previously input solution code.

In some embodiments, the display module further includes a given code set display unit configured to display the given code set.

In some embodiments, the given code set display unit includes a plurality of given code display lights, each given code display light being configured to display a given code.

In some embodiments, the main control module is configured to control the given code set display unit to display the preset set of secret codes at the end of the game round.

In some embodiments, the preset set of secret codes is configured to include 2-8 digit secret codes.

In some embodiments, the decryptor device includes a display screen configured to be electrically connected to the power supply module.

In some embodiments, the display screen is configured to display at least one of the following information: game level information; game time; number of consecutive customs passes; the given set of codes.

In some embodiments, the decryptor device includes a touch screen, and the touch screen is electrically connected to the power supply module.

In some embodiments, the touch screen is configured for at least one of: game mode selection; game level selection; Game Tips Selection.

In some embodiments, the decryptor device is configured to include a plurality of game modes.

In some embodiments, the decryptor device further comprises a game mode selector, the game mode selector being configured to select a game mode.

In some embodiments, the game mode includes a single-player game mode, a man-machine battle mode, and a multiplayer battle mode according to the participating game parties; and/or the game modes include a simple mode and an expert mode according to game difficulty levels.

In some embodiments, the decryptor device includes a sound module, the sound module is electrically connected to the power supply module and is configured to provide an audible prompt.

In some embodiments, the sound prompt includes at least one of the following prompts: power on/off prompts; game mode tips; customs clearance prompts; solution code set correct prompt; solution code collection error tips; operation error prompt; solution code tips correctly.

In some embodiments, the decryptor device includes a wireless transmission and reception module or a wired transmission and reception module.

### BRIEF DESCRIPTION OF DRAWINGS

In order to explain the technical solutions of the embodiments of the present disclosure more clearly, the drawings that need to be used in the embodiments will be briefly introduced below. It should be understood that the following drawings only show certain embodiments of the present disclosure and therefore do not It should be regarded as a limitation on the scope. For those of ordinary skill in the art, other relevant drawings can also be obtained based on these drawings without exerting creative efforts. In the drawings:
FIG. 1 shows a perspective view of a decryptor device according to an exemplary embodiment;
FIG. 2 shows a perspective exploded view of a decryptor device according to an exemplary embodiment;
FIG. 3 shows a longitudinal cross-sectional view of a decryptor device according to an exemplary embodiment;
FIG. 4a shows a perspective view of a holder plate of a display device according to an exemplary embodiment, which may be used in the decryptor device apparatus proposed by the present disclosure;
FIG. 4b shows a perspective exploded view of a portion of a decryptor device according to an exemplary embodiment, wherein a portion of an exemplary display device, a master control module, a display module, a comparison result indication module, and a given code set display unit, a display screen are shown;
FIG. 5 illustrates an exemplary master control module of a decryptor device and various components disposed thereon in accordance with an exemplary embodiment;
FIG. 6 shows a perspective exploded view of a portion of a decryptor device showing an exemplary housing, selector, and master control module according to an exemplary embodiment;
FIG. 7 shows a perspective exploded view of a portion of a decryptor device showing an exemplary selector and master control module according to an exemplary embodiment;
FIG. 8 shows a selector according to an exemplary embodiment in plan view;
FIG. 9 shows a perspective exploded view of a portion of a decryptor device showing an exemplary housing, selector, master control module, and power supply module according to an exemplary embodiment;
FIG. 10 shows a perspective exploded view of a portion of a decryptor device showing an exemplary housing, selector, master control module, and power supply module according to an exemplary embodiment;
FIG. 11 shows a perspective cutaway view of a portion of a decryptor device showing an exemplary housing, selector, master control module, and power supply module according to an exemplary embodiment;
FIG. 12 shows a perspective cutaway view of a portion of a decryptor device showing an exemplary housing and selector according to an exemplary embodiment.

List of reference signs
10 decryptor device; 20 display screens; 100 housing; 110 mounting shaft; 120 positioning plate; 121 first positioning recess; 122 second positioning recess; 123 third positioning recess; 130 bottom cover; 140 first mating limiting part; 150 second mating limiting part; 160 housing frame; 180 retaining portion; 200 power supply module; 300 code input module; 310 code selection unit; 320 code input unit; 400 display module; 401 display unit; 401a first display unit; 401b second display unit; 401c third display unit; 401d fourth display unit; 402 display light element; 410 first set of display units; 420 second set of display units; 430 third set of display units; 440 Fourth set of display units; 450 fifth set of display units; 460 sixth set of display units; 470 seventh set of display units; 480 given code set display unit; 481 given code display light; 500 main control module; 510 circuit board; 610 first indicator light unit; 611 first indicator light element; 620 second indicator light unit; 620a sub-unit; 621 second indicator light unit; 700 answer submitter; 350 digit selector; 800 selector; 810 knob member; 811 mounting hole; 820 elastic member; 830 positioner; 840 first limiting part; 850 second limiting part; 870 first arm; 871 signal lights; 880 second arm; 881 signal lights; 891 magnet; 892 first Hall magnetic sensor; 893 second Hall magnetic sensor; 900 light processing part; 900a first light processing part; 900b second light processing part; 900c third light processing part; 900d fourth light processing part; 910, 920, 940, 950 light processing unit; 910 first light processing unit; 920 second light processing unit; 940 fourth light processing unit; 950 fifth light processing unit; 911, 921, 931, 941 light-transmitting part; 911 first light-transmitting part; 921 second light-transmitting part; 941 fourth light-transmitting part; 951 fifth light-transmitting part; 980 connection frame; 960 retaining plate; 960a first retaining plate part; 960b second retaining plate part; 961, 962, 964, 965 mounting holes; 961 first mounting hole; 962 second mounting hole; 964 fourth mounting hole; 965 fifth mounting hole; 966 partition plate; 981, 982, 983, 984 light shielding part; 9100, 9200, 9400, 9500 protrusion mounting part; 9100 first protrusion mounting part; 9200 second protrusion mounting part; 9400 fourth protrusion mounting part; 9500 fifth protrusion mounting part; 9101, 9201, 9401, 9501 limiting structure; 9403 first portion; 9404 second portion.

### DETAILED DESCRIPTION

Hereinafter, the decryptor device 10, the selector 800 and the display device according to the embodiment of the present disclosure are described in detail with reference to the accompanying drawings. In order to make the purpose, technical solutions and advantages of the present practical disclosure clearer, the technical solutions in the embodiments of the present disclosure will be clearly and completely described below in conjunction with the accompanying drawings in the embodiments of the present disclosure. Obviously, the described embodiments are Some embodiments of this disclosure, but not all embodiments.

Thus, the following detailed description of the embodiments of the disclosure provided in connection with the appended drawings is not intended to limit the scope of the disclosure, as claimed, but is merely representative of selected embodiments of the disclosure. Based on the embodiments in this disclosure, all other embodiments obtained by those of ordinary skill in the art without creative efforts fall within the scope of protection of this disclosure.

Singular forms include plural forms unless the context otherwise defines. Throughout the specification, the terms "include," "have," and the like are used herein to specify the presence of stated features, numbers, steps, operations, elements, parts, or combinations thereof, but do not preclude the presence or addition of one or more other features, numbers, steps, operations, elements, parts, or combinations thereof.

In addition, even though terms including ordinal numbers such as "first", "second", etc. may be used to describe various components, these components are not limited by these terms, and these terms are only used to distinguish one element from other elements. For example, a first component could be termed a second component, and, similarly, a second component could be termed a first component, without departing from the scope of the present disclosure.

In the description of the present invention, it should be understood that the orientations or positional relationships indicated by the terms "upper", "lower", "left", "right", "inner", "outer", etc. are based on the orientations shown in the drawings. Or positional relationship, or the orientation or positional relationship that is customarily placed when using the disclosed product, or the orientation or positional relationship that is customarily understood by those skilled in the art. It is only for the convenience of describing the present disclosure and simplifying the description, rather than indicating or Implied that the equipment or element referred to must have a specific orientation, be constructed and operated in a specific orientation, and therefore cannot be understood as a limitation of the present disclosure.

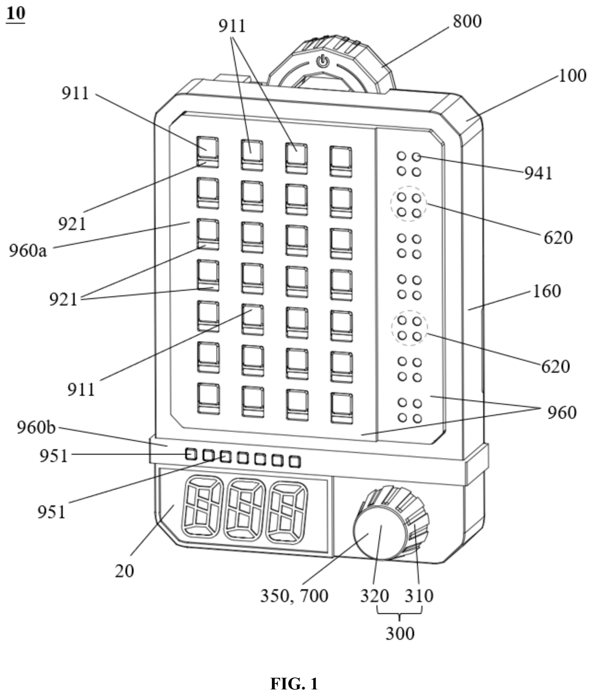

As shown in FIGS. 1-2, the present disclosure proposes a decryptor device 10 configured for a user to answer a question, which is a preset set of secret codes. According to one embodiment, the preset set of secret codes may include a plurality of secret codes, each secret code being selected from a given code set, and the given code set includes a plurality of given codes that are different from each other.

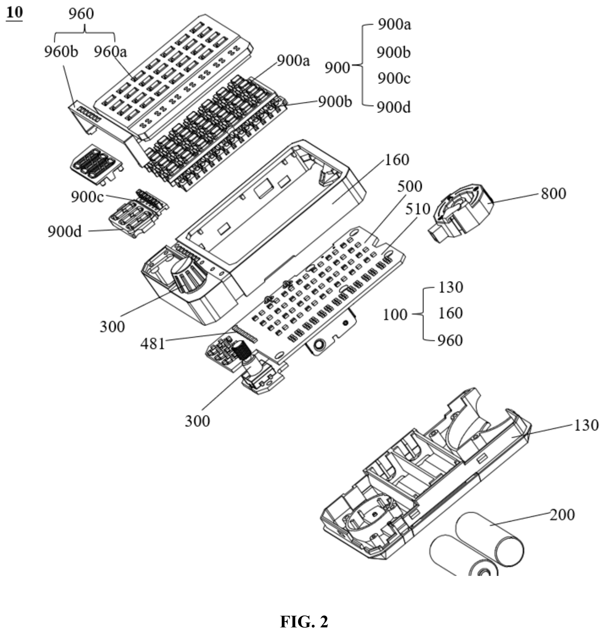

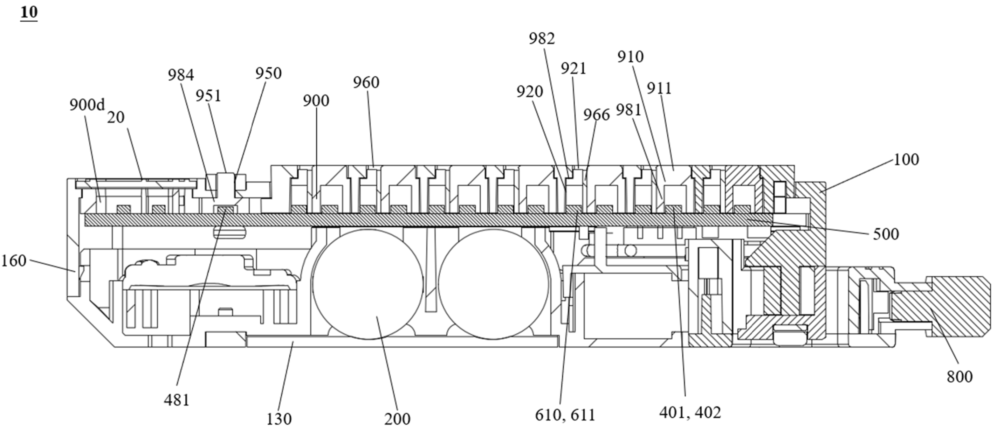

According to some embodiments, as shown in FIGS. 1-3, 6 and 8-12, the decryptor device 10 may include a housing 100, for example, for housing, holding, and mounting other relevant components. The decryptor device 10 may also include a power supply module 200, as shown in FIGS. 2-3 and 9-10, which is configured to supply power to the power-consuming components of the decryptor device 10. The power supply module 200 may include disposable batteries or rechargeable batteries. According to one embodiment, as shown in the figure, the power module 200 is held by the housing 100.

According to some embodiments, as shown in FIGS. 1-2 and 4-5, the decryptor device 10 may also include a code input module 300, the code input module 300 is configured to input at least the answer, the answer is a set of solution codes, the number of solution codes included in the set of solution codes is the same as the number of secret codes included in the preset set of secret codes, and the solution codes are selected from the given code set mentioned above. According to some embodiments, as shown in FIG. 1, the code input module 300 may be disposed on the housing 100 and electrically connected to the power supply module 200 to be powered by the power supply module 200.

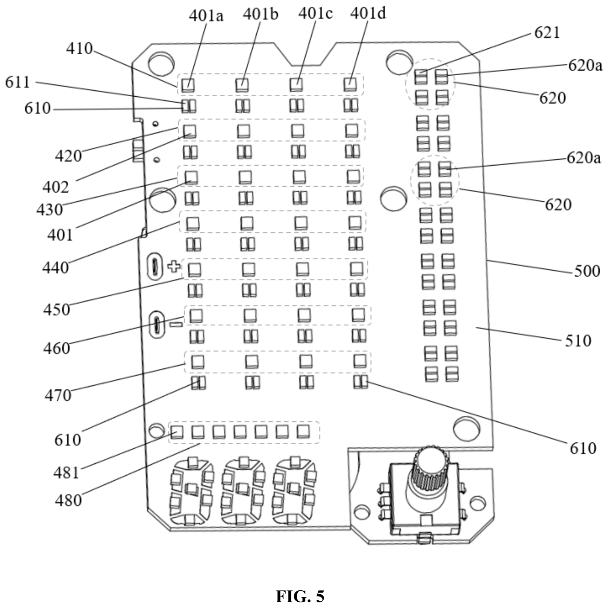

According to some embodiments, as shown in FIGS. 1-5, the decryptor device 10 may further include a display module 400, which may include a display unit 401, such as at least one set of display units 410, 420, 430, 440, 450, 460, 470, each set of display units 410, 420, 430, 440, 450, 460, 470 being configured to display a corresponding set of solution codes. It should be noted that each set of display elements is circled with a dashed line in FIG. 5. In some embodiments, the display module 400 is disposed on the housing 100 and is electrically connected to the power supply module 200 to be powered by the power supply module 200. In some embodiments, the display module 400 is configured to operate in association with the code entry module 300. More specifically, the display module 400 is configured to operate in association with the code input module 300 when the code input module 300 operates to input answers, so that the corresponding set of display units 410, 420, 430, 440, 450, 460, 470 display the input corresponding solution code and the corresponding solution code set.

In the sense of this application, each code, including a "given code", a "secret code" and a "solution code", may have a "code content" that allows the user to identify the corresponding code. "Given code" only includes code content and does not include the positional sequential relationship between codes. "Secret code" and "solution code" can include only code content. Additionally, the "secret code" and "solution code" may also include the positional sequential relationship between codes, that is, the positional sequential relationship between codes in the corresponding "preset set of secret codes" and "solution code set" has decryption meaning; more specifically, in this case, if the code content of the secret codes included in each of the two preset set of secret codes is the same, but the positional sequential relationship between the secret codes is different, then the two preset set of secret codes are two different preset set of secret codes; similarly, two solution code sets are two different solution code sets if the code contents of the solution codes included in each of the two solution code sets are the same, but the positional sequence between the solution codes is different.

According to some embodiments, the code content of a given code of a given code set is represented by at least one of a color, a number, a letter, a word, a pattern. Exemplarily and not exclusively, the code content of a plurality of given codes included in a given code set is represented by colors, for example, the plurality of given codes may each be one of a plurality of colors, for example, each red, orange, yellow, green, cyan, blue, purple or other colors; exemplarily but not exclusively, the code contents of a plurality of given codes comprised by a given code set are represented by numbers, for example the plurality of given codes may each be one of a plurality of numbers, for example each being one of the numbers 1, 2, 3, 4, 5, 6, 7, 8, 9, 0; exemplarily but not exclusively, the code content of a plurality of given codes comprised by a given code set is represented by letters, each given code may be one of 26 English letters; exemplarily but not exclusively, the code content of a plurality of given codes comprised by a given set of codes is represented by patterns, each given code may be one of a plurality of different patterns. It should be noted that in the sense of this article, the given code set is known in advance to the user and includes given codes available for selection and use or input by the user during the course of the game.

Furthermore, in the sense of the present disclosure, a "preset set of secret codes" corresponds to a decryption topic, that is, the preset set of secret codes can be preset before the corresponding game play or stage begins. According to some embodiments, the preset set of secret codes is provided by the proposing user, i.e. by a person, for example by an opponent in an everyone matchup mode. According to still further embodiments, the preset set of secret codes is preset by the decryptor device 10 in an automatic manner. In a more specific embodiment, the code contents of the plurality of secret codes of the preset set of secret codes are set without overlapping each other. In some embodiments, the preset set of secret codes is configured to include 2-8-digit secret codes, preferably 4-6-digit secret codes.

In the sense of this disclosure, a "set of solution codes" is equivalent to a decryption answer given to a question, and according to different game settings, the code content or code content + code position sequence relationship of the solution codes included in the solution code set. When all correspond completely to the code content or code content + code positional sequential relationship of the secret codes included in the preset set of secret codes, the solution code set constitutes the correct answer of the corresponding preset set of secret codes.

According to some embodiments, as shown in FIGS. 2-7 and 9-11, the decryptor device also includes a main control module 500, which can be configured to be connected to the power supply module 200 to be powered by the power supply module 200. More specifically, master control module 500 is configured as a dedicated master control module.

In some embodiments, the code input module 300 is configured to be communicatively connected with the main control module 500, and the display module 400 is also configured to be communicatively connected with the main control module 500. More specifically, the main control module 500 may be configured to be able to control the display module 400 to display the input solution code in response to the code input module 300 operating to input the solution code. This allows the user to intuitively understand which solution codes have been entered.

According to some embodiments, as shown in FIGS. 1-2 and 4-5, each set of display units 410, 420, 430, 440, 450, 460, 470 may include a plurality of display units 401, and each display unit 401 may include at least one Display light element 402. Illustratively and not exclusively, the display light element 402 may be an LED light. In some implementations, the color, brightness, and flashing pattern of the display light element 402 are variable. In some embodiments, indicator light element 402 is configured to be independently operable relative to other indicator light elements. Thereby, a simple construction of the display unit 401 is allowed, while a variable operability of the display unit 401 is achieved, so that the operation and function of the decryptor device 10 can be expanded by the display unit 401 at a simple structure and at a reasonable cost as needed. According to some embodiments, each display unit 401 in each set of display units 410, 420, 430, 440, 450, 460, 470 is configured to be able to display one solution code. Thus, a set of display units 410, 420, 430, 440, 450, 460, 470 can display one solution code set, thereby allowing the solution code set to be presented in an intuitive manner, satisfying human-computer interaction and user-friendliness requirements. According to some embodiments, as shown in FIGS. 2-5, the display light element 402 is provided on the circuit board 510 of the main control module 500, thereby allowing the space inside the decryptor device 10 to be fully utilized, and eliminating connecting wires or the like between the display unit 401 and the circuit board 510, thereby saving space and cost, allowing a very compact construction to be formed in a very cost-effective manner.

According to some embodiments, the preset set of secret codes does not include positional sequential relationships between multiple secret codes therein; for example, a preset set of secret codes can be four numbers: 1, 4, 5, and 7. As long as the solution secret code includes multiple solution codes with code contents corresponding to 1, 4, 5, and 7 respectively, it is considered to be successfully decrypted. For example, in this case, the solution code set consisting of the solution codes 5, 7, 4, and 1 input in sequence is also considered to be the correct answer. According to other embodiments, each preset set of secret codes includes a positional sequential relationship between the plurality of secret codes constituting it, that is, then only the solution code set including the plurality of solution codes satisfying the positional sequential relationship constitutes the correct answer of the preset set of secret codes; for example, a preset set of secret codes can be four numbers given in sequence: 1, 4, 5, and 7, then only the solution code set that satisfies this sequence constitutes the correct answer, that is, the solution code set must include the number entered in sequence 1, 4, 5, 7. According to some embodiments, the plurality of display units 401 of each set of display units 410, 420, 430, 440, 450, 460, 470 are positioned sequentially such that the positional sequential relationship between the plurality of display units 401 of each set of display units 410, 420, 430, 440, 450, 460, 470 can reflect or present the positional sequential relationship between the plurality of solution codes in the solution code set. This allows the user to determine the positional sequential relationship between the solution codes in the solution code set very intuitively.

According to some embodiments, the decryptor device 10 is also configured to be able to provide a comparison result indication about the comparison result between the answer, that is, the solution code set, and the corresponding question, that is, the preset set of secret codes, to provide the user with feedback on the answer, guide the user to find correct answers, improve human-computer interaction and fun game, and enhance user experience. According to some embodiments, the comparison result indication includes at least one of the following information: whether the solution code set is consistent with the preset set of secret codes; the number and/or location of completely correct solution codes included in the solution code set; the number and/or location of partially correct solution codes included in the solution code set; the number and/or location of error solution codes included in the solution code set. According to some embodiments, a completely correct solution code is a solution code whose position sequence and code content correspond to a preset set of secret codes; partially correct solution codes are solution codes whose position sequence does not correspond to the preset set of secret codes and whose code content is included in the preset set of secret codes; the error solution code is a solution code whose position sequence and code content do not correspond to the preset set of secret codes. It should be noted that in the sense of this article, the set of solution codes being consistent with the preset set of secret codes means that the answer is successful.

According to some embodiments, the display module 400 is configured to provide a comparison result indication about the comparison result between the answer, that is, the solution code set, and the corresponding question, that is, the preset set of secret codes, thereby providing the user with answer feedback in an intuitive manner., while enhancing the fun and human-computer interaction of the game, it is convenient for the user to adjust the answer ideas. More specifically, the at least one set of display elements 410, 420, 430, 440, 450, 460, 470 is configured to provide an indication of the result of the comparison. More specifically, at least one display light element 402 of each set of display elements 410, 420, 430, 440, 450, 460, 470 is configured to provide an indication of the result of the comparison. According to some embodiments, the display light element 402 of each set of display units 410, 420, 430, 440, 450, 460, 470 is configured to provide an indication of the comparison result through at least one of a color, a brightness, a pattern, and a flashing pattern of the display. Therefore, the display unit 401 can display both the solution code and the comparison result between the answer, that is, the solution code set, and the question, that is, the preset set of secret codes, so that more functions can be integrated with a minimized number of components, thereby Simplifying the structure of the decryptor device 10 contributes to achieving a more compact overall structure and further reducing costs. According to some embodiments, the display unit 401 of each set of display units 410, 420, 430, 440, 450, 460, 470 is configured to simultaneously display the solution codes of the solution code set and provide an indication of the comparison result. To illustrate, the corresponding display light element 402 of each set of display units 410, 420, 430, 440, 450, 460, 470 may be illuminated to show the solution code, while the display light element 402 may provide an indication of the comparison result through at least one of color variability, brightness variability, and blinking pattern.

According to some embodiments, the main control module 500 may also be configured to be able to compare the input solution code set with the preset set of secret codes and give the comparison result.

According to some embodiments, the main control module 500 may be configured to control the display module 400, more specifically the display light elements 402 of each display unit 401, in response to the code input module 300 operating to input the last digit of the solution code set, to provide a comparison result indication regarding the comparison result.

According to some embodiments, the decryptor device 10 may further comprise a solution result indication module configured to provide a comparison result indication on the result of the comparison between the answer, i.e. the solution code set, and the question, i.e. the preset set of secret codes. The solution result indicates that the module can be configured to be electrically connected to the power supply module 200 to be powered by the power supply module 200. According to some embodiments, the solution result indication module includes indicator light elements 611, 621. Exemplarily and not exclusively, the indicator light elements 611, 621 may be LED lights. According to some embodiments, the color, brightness, and blinking pattern of the indicator light elements 611, 621 are variable. According to some embodiments, the indicator light elements 611, 621 are configured to be independently operable relative to the other indicator light elements. Thereby, a simple construction of the solution result instructing module is allowed while variable operability of the solution result instructing module is realized, so that the instructing function of the decryptor device can be expanded by the solution result instructing module at a simple structure and at a reasonable cost as needed. According to some embodiments, the solution result indication module is configured to indicate the comparison result through at least one of the color, brightness, pattern, and flashing mode of the indicator light elements 611, 621. According to some embodiments, the indicator light elements are provided on the circuit board 510 of the main control module 500, thereby allowing the space inside the decryptor device 10 to be fully utilized, and eliminating connecting wires or the like between the indicator light elements and the circuit board 510, thereby saving space and cost, allowing a very compact construction to be formed in a very cost effective manner.

According to some embodiments, the solution result indication module is configured to be communicatively connected to the main control module 500, and the main control module 500 can be configured to control the solution result indication module to provide a comparison result indication based on the comparison result.

According to some embodiments, as shown in FIGS. 1-5, the solution result indication module may include a first indicator light unit 610 provided corresponding to each display unit 401 configured to display the solution code, and the first indicator light unit 610 may include the above-mentioned indicator light element, referred to as the first indicator light element 611. Therefore, the first indicator light unit 610 can provide a comparison result indication related to the solution code displayed by the corresponding display unit 401 very intuitively and clearly, thereby enhancing human-machine interactivity and game convenience, and improving user experience. According to some embodiments, the first indicator light unit 610 is disposed below or above or to the side of the corresponding display unit 401, which allows the indication information displayed by the first indicator light unit 610 to be clearly visible and visually distinguished from the information displayed by the display unit 401. At the same time, it is feasible to design and manufacture and is cost-effective.

According to some embodiments, the first indicator light unit 610 is configured to: provide completely correct indication information when the position sequence relationship and code content of the solution code displayed by the corresponding display unit 401 and the secret code in the preset set of secret codes are consistent; and/or provide error indication information when the solution code displayed by the corresponding display unit 401 is not consistent with the positional sequential relationship and code content of the secret code in the preset set of secret codes; and/or provide partially correct indication information when the code content of the solution code displayed by the corresponding display unit 401 is included in the preset set of secret codes, but the position sequence relationship is not consistent with the preset set of secret codes. According to an embodiment, the completely correct indication information, the error indication information, the partially correct indication information and the solution code input position indication are distinguished by at least one difference in color, pattern, brightness or blinking pattern displayed by the corresponding first indicator light units 610.

According to some embodiments, the main control module 500 may be configured to control the corresponding first indicator light unit 610 to provide a comparison result indication in response to the code input module 300 operating to input the last digit solution code in the solution code set.

According to some embodiments, as shown in FIGS. 1-5, the solution result indication module may include a second indicator light unit 620 provided corresponding to each set of display units 410, 420, 430, 440, 450, 460, 470, and the second indicator light unit 620 may include an indicator light element, referred to as a second indicator light element 621, and configured to provide a comparison result indication regarding the result of the comparison between the answer, i.e. the solution code set, and the question, i.e. the preset set of secret codes. According to some embodiments, the second indicator light unit 620 is configured to: provide the number and/or location of correct codes (i.e. code content included in the preset set of secret codes), and/or the number and/or location of error codes without including a positional sequential relationship between the codes; the number and/or position of completely correct solution codes, and/or the number and/or position of partially correct solution codes, and/or the number and/or position of error solution codes are provided in case of including positional sequential relationships between the codes.

According to some embodiments, as shown in FIGS. 1-5, each second indicator light unit 620 may include a plurality of sub-units 620a, each sub-unit 620a including one or more indicator light elements 621, the plurality of sub-units 620a being configured to provide an indication of the comparison result as described above. According to some embodiments, each sub-unit 620a of the second indicator light unit 620 is configured to provide a comparison result indication related to one of the entered set of solution codes. More specifically, each sub-unit 620a of the second indicator light unit 620 may be provided corresponding to one display unit 401 of the set of display units 410, 420, 430, 440, 450, 460, 470, so that each sub-unit 620a can provide a comparison result indication with respect to the solution code displayed by the corresponding provided display unit 401. According to some embodiments, the plurality of sub-units 620a of each second indicator light unit 620 are disposed close to each other. Exemplarily, the plurality of sub-units 620a of each second indicator light unit 620 are divided into a plurality of rows and/or columns, more specifically arranged in an array, or other pattern, such as circles, that can provide an indication of the result of the comparison in an intuitively clear manner. According to some embodiments, each second indicator light unit 620 is disposed adjacent to a corresponding set of display units 410, 420, 430, 440, 450, 460, 470. According to some embodiments, each set of display units 410, 420, 430, 440, 450, 460, 470 is arranged in rows or columns, and the corresponding second indicator light units 620 are provided at the ends of the rows or columns, such as the head and end ends. Therefore, the second indicator light unit 620 can intuitively and clearly provide relevant information to the user, thereby enhancing user experience satisfaction.

According to some embodiments, the main control module 500 may be configured to control the second indicator light unit 620 to provide a comparison result indication in response to the code input module 300 operating to input the last solution code in the solution code set.

In some embodiments, the solution result indication module includes one of the first indicator light unit 610 and the second indicator light unit 620 as described above. In some embodiments, the solution result indication module includes both the first indicator light unit 610 and the second indicator light unit 620 as described above. In some embodiments, the decryptor device 10 is configured to include a plurality of game modes. Correspondingly, the decryptor device 10 may further comprise a game mode selector configured to select a game mode. According to some embodiments, the plurality of game modes includes a simple mode and an expert mode.

According to some embodiments, the solution result indication module may be configured to provide a comparison result indication in association with the positional sequential relationship of the solution codes in the solution code set, including indicating whether the solution code is a fully correct solution code, i.e. indicating whether each digit of the solution code is a fully correct solution code; additionally, the solution result indication module may be further configured to indicate partially correct solution codes and/or error solution codes in association with the positional sequential relationship of the solution codes in the solution code set. Exemplarily, these embodiments may correspond to a simple mode among a plurality of game modes of the decryptor device 10. Thereby, the user can determine very intuitively and clearly based on the comparison result indication provided by the solution result indication module. Which display unit 401 among the display units 401 of the set of display units 410, 420, 430, 440, 450, 460, 470 that displays each solution code of the solution code set displays what solution code, that is, whether the solution code is a correct or completely correct solution code and/or a partially correct solution code and/or an error solution code. According to some embodiments, in the simple mode, only the first indicator light unit 610 as described above is operable. In a specific embodiment, the first indicator light unit 610 may be provided in one-to-one correspondence with the display units 401 in each set of display units 410, 420, 430, 440, 450, 460, 470, especially in position. Corresponding to the corresponding display unit 401. The simple mode has enhanced human-computer interaction and can provide users with definite answering directions.

According to some embodiments, the solution result indication module may be set to give an ambiguous prompt. According to some embodiments, the solution result indication module may be configured to give only the number of completely correct codes and/or the number of partially correct codes and/or the number of error codes in the solution code set, without giving an indication of the comparison result about a certain solution code in association with the solution code. Exemplarily, these embodiments may correspond to the expert mode among the plurality of game modes of the decryptor device 10. In some embodiments, in the expert mode, only the second indicator light unit 620 as described above is operable. In the expert mode, the difficulty of solving problems increases, which can arouse users' desire to challenge, and further develop users' intellectual activities to help users form more rigorous intellectual thinking.

Thus, the decryptor device 10 proposed in the present disclosure allows operation in game modes with different difficulty, satisfying the diverse needs of users, while ensuring high cost effectiveness.

According to some embodiments, as shown in FIGS. 1-2 and 4-5, the display module 400 includes multiple sets of display units 410, 420, 430, 440, 450, 460, 470, and each set of display units 410, 420, 430, 440, 450, 460, 470 are configured to be able to display the input corresponding set of solution codes. In some embodiments, the plurality of sets of display elements 410, 420, 430, 440, 450, 460, 470 are arranged in an array of display elements 401, where each set of display elements is arranged in rows or columns. According to some embodiments, each set of display units 410, 420, 430, 440, 450, 460, 470 in the plurality of sets of display units is configured to keep displaying the corresponding solution code set after starting to display the corresponding solution code set until the corresponding game end of the round, which further enhances human-computer interactivity and allows the user to be guided to find the correct answer faster based on the previously input solution code set to complete the answer question, improving user interest and experience. According to further embodiments, each set of display units 410, 420, 430, 440, 450, 460, 470 of the plurality of sets of display units is configured to maintain display of the fully correct codes and/or partially correct codes of the corresponding set of solution codes after starting to display the corresponding set of solution codes until the end of the corresponding game session. In some embodiments, the main control module 500 may be configured to control the plurality of sets of display units 410, 420, 430, 440, 450, 460, 470 to keep displaying the corresponding solution code set or the corresponding solution code set therein after starting to display the corresponding solution code set. Completely correct code and/or partially correct code until the end of the corresponding game session.

In some embodiments, the decryptor device 10 is configured such that the end of the game session corresponds to the occurrence of at least one of the following events: the input solution code set is consistent with the preset set of secret codes, that is, the correct answer is input and the problem is successfully solved; the same number of solution code sets as the number of groups of the plurality of sets of display units is input; when the game time reaches the preset time period, it can further be set to automatically end the game session when the preset time period is reached; the number of times the solution code set was entered reached the preset number. In the context of this disclosure, a game session refers to a "round", "level", or "game", and more specifically, the process of solving a preset secret code set constitutes one game session.

For example, as shown in FIGS. 1-2 and 4-5, the decryptor device 10 may be configured to include seven sets of display units, namely a first set of display units 410, a second set of display units 420, a third set of display units 430, a fourth set of display units 440, a fifth set of display units 450, a sixth set of display units 460 and a seventh set of display units 470, each set of display units including four display units 401. Of course, the number of sets of display elements and the number of display elements per set are exemplary and variable. Exemplarily, the preset set of secret codes may include a four-digit secret code. Assuming that the game round has not ended when the third solution code set is input, that is, when the third set display unit 430 displays the third solution code set, the first set display unit 410 keeps displaying the first input solution code set or a part thereof, and the second set display unit 420 keeps displaying the second input solution code set or a part thereof; during the subsequent game process, the third set display unit 430 will also maintain the display of the input third solution code set or a part thereof; and so on.

According to some embodiments, each set of display units 410, 420, 430, 440, 450, 460, 470 in the plurality of sets of display units may be configured to keep displaying the comparison result indication until the corresponding game after starting to display the corresponding comparison result indication. End of the round, which allows the player to be provided with clues for the inference of the answers or retains the record of the player's answers and provides a reference for subsequent answers, thereby further enhancing human-computer interactivity and allowing the user to be guided to find the correct answer faster based on the previously input set of solution codes. Complete the answer and improve user interest and experience.

In some embodiments, the main control module 500 may be configured to control a subsequent set of display units to automatically display the completely correct code in the previously input solution code set based on the comparison result. In some embodiments, a completely correct solution code is a solution code whose position sequence relationship and code content correspond to the preset set of secret codes. For example, as shown in FIGS. 1-2 and 4-5, the decryptor device 10 may be configured to include the first set display unit 410, the second set display unit 420, the third set display unit 430, the fourth set display unit 440, the fifth set display unit 450, the sixth set display unit 460 and the seventh set display unit 470 as described above, each set of display units may exemplarily include four display units 401. Exemplarily, the preset set of secret codes may include a four-digit secret code. Assuming that after inputting the first solution code set, the comparison result obtained by the main control module 500 is that the second solution code in the first solution code set is a completely correct code, the main control module 500 can control the second display unit 401 in the second set of display units 420 to automatically display the second solution code, and the second solution code remains exactly the same as the second solution code in the first solution code set; and so on.

According to some embodiments, the main control module 500 may be configured to activate the next set of display units in response to the submission of a set of solution codes before the end of the corresponding game session. Activation of the next set of display units means that the next set of display units can be allowed to operate at this time to provide corresponding display information, including displaying the input solution code in association with the solution code input operation of the code input module. More specifically, it can be set that before the previous set of display units displays the solution code set, the next or each subsequent set of display units is in a pending activation state. More specifically, at this time, the next or each subsequent set of display units cannot display the input solution code in association with the solution code input operation of the code input module. For example, as shown in FIGS. 1-2 and 4-5, after the first set display unit 410 displays the first solution code set, the second set display unit 420 can be automatically activated so that it can communicate with the code input module 300 Display the input solution code in association with the solution code input operation, while the third to seventh set display units are still in a pending activation state.

According to some embodiments, the main control module 500 may be configured to determine whether the currently input solution code is the same as the previously input solution code during the process of the code input module operating to input one of the solution code sets. Further, the main control module 500 can also be configured to eliminate the previously input solution code or give an error input indication when it is determined that the currently input solution code is the same as the previously input solution code. For example, the main control module 500 can control the display module 400 to give an error input indication. For example, as shown in FIGS. 1-2 and 4-5, in the process of inputting the first set of solution codes, if the first two input solution codes are 1 and 3, respectively, then if the third input solution code is also input, the second input solution code will be eliminated, so that the second input solution code needs to be re-input later; alternatively, the main control module 500 may give an error input indication to remind the user that the solution code was wrongly entered.

According to some embodiments, the main control module 500 may be configured to control the display module 400 to automatically display at least one automatic solution code set before inputting any solution code set via the code input module 300, and control the solution result indication module to provide information about the at least one automatic solution code set. A comparison result indication of the comparison result between the code set and the preset set of secret codes. The automatic solution code set is not the solution code set entered by the user. In some embodiments, the automatic solution code set may be a solution code set randomly generated by the main control module 500. More specifically, the main control module 500 can control at least one set of display units to display the automatic solution code set and control the answer result indication module to provide a corresponding comparison result indication at the beginning of the game session. This allows to further improve the human-computer interaction and help the user break the mindset, further facilitate the puzzle function of the decryptor device, and improve user satisfaction.

In some embodiments, the first indicator light unit 610 according to any of the above embodiments is configured to keep displaying the comparison result indication until the end of the corresponding game link after starting to provide the comparison result indication. This further enhances human-computer interactivity and allows users to be guided to find the correct answer faster to complete the answer based on the comparison result indication of the previously entered set of solution codes, increasing user interest and experience. More specifically, the main control module 500 may be configured to control each first indicator light unit 610 to keep displaying the comparison result indication unchanged until the corresponding game session ends after starting to provide the comparison result indication.

In some embodiments, the second indicator light unit 620 according to any of the above embodiments is configured to keep displaying the comparison result indication until the end of the corresponding game link after starting to provide the comparison result indication. This further enhances human-computer interactivity and allows users to be guided to find the correct answer faster to complete the answer based on the comparison result indication of the previously entered set of solution codes, increasing user interest and experience. More specifically, the main control module 500 may be configured to control each second indicator light unit 620 to keep displaying the comparison result indication unchanged until the corresponding game session ends after starting to provide the comparison result indication.

According to some embodiments, as shown in FIG. 1, the decryptor device 10 also includes an answer submitter 700, which is configured to submit the set of solution codes. More specifically, after a set of solution codes has been input via the code input module 300, the answer submitter 700 may be operated to submit the set of solution codes to the decryptor device 10. More specifically, the answer submitter 700 may be configured to be in communication connection with the main control module 500, and the answer submitter 700 is operable to submit the input set of solution codes to the main control module 500. Therefore, the main control module 500 can perform a comparison between the submitted solution code set and the preset set of secret codes and give a comparison result in response to the answer submitter 700 submitting the solution code set. According to some embodiments, the answer submitter may be provided in the form of a button or touch screen. The answer submitter 700 is more specifically disposed on the housing 100. According to some embodiments, the answer submitter 700 may be configured to be shared with at least a part of the code input module 300, more specifically with the code input unit 320 of the code input module 300 to be described below.

According to some embodiments, the above-mentioned first indicator light unit 610 may be configured to operate in association with the answer submitter 700 to activate or enable the corresponding first indicator light unit 610 to provide a comparison result indication when or after the solution code set is submitted by the answer submitter 700. More specifically, the main control module 500 may be configured to control the corresponding first indicator light unit 610 to provide the comparison result indication in response to the submission of the solution code set, and more specifically may control the first indicator light unit 610 to keep displaying the comparison result indication until the end of the game session. By way of example, if the answer submitter 700 operates to submit a second set of solution codes, then the first indicator light unit 610 provided corresponding to the second set of display units 420 is enabled to provide a comparison result indication as to the result of a comparison between the second set of solution codes and the predetermined secret code result; optionally, these first indicator light units 610 will keep displaying the comparison result indication until the end of the game session.

Additionally or alternatively, the above-mentioned second indicator light unit 620 may be configured to operate in association with the answer submitter 700 to activate or enable the corresponding second indicator light unit 620 to provide a comparison result indication when or after the solution code set has been submitted by the answer submitter 700. More specifically, the main control module 500 may be configured to control the second indicator light unit 620 to provide the comparison result indication in response to the submission of the solution code set, and more specifically may control the second indicator light unit 620 to keep displaying the comparison result indication until the end of the game session. By way of example, if the answer submitter 700 operates to submit a second set of solution codes, then the second indicator light unit 620 provided corresponding to the second set display unit 420 is enabled to provide a comparison result indication as to the result of the comparison between the second set of solution codes and the predetermined secret code result; optionally, these second indicator light units 620 will keep displaying the comparison result indication until the end of the game session.

In some embodiments, the main control module 500 may also be configured to control a corresponding set of display units of the display module 400 to simultaneously display the set of solution codes and the indication of the comparison result in response to the submission of the set of solution codes, and more specifically, may control a corresponding set of display units to keep displaying a portion of the indication of the set of solution codes and/or at least a portion of the indication of the comparison result until the end of the game session.

In some embodiments, as shown in FIGS. 1-5, the display module 400 further includes a given code set display unit 480, which is configured to display the given code set, and more specifically to maintain display of the given code set while the game session is in progress. This allows the user to intuitively understand the available codes. In some embodiments, the given code set display unit 480 is configured to include a plurality of given code display lights 481, and each given code display light 481 may be configured to display a given code. In some embodiments, the plurality of given code display lights 481 are arranged in rows and/or columns. In some embodiments, the given code set display unit 480 is configured to display the corresponding preset set of secret codes at the end of the game round. More specifically, the main control module 500 may be configured to control the given code set display unit 480 to display the corresponding preset set of secret codes at the end of the game round. This facilitates users to understand the question and answer information of each game session, allowing users to quickly master game skills. According to some embodiments, the given code display light 481 is disposed on the circuit board 510 of the main control module 500, thereby allowing the space inside the decryptor device 10 to be fully utilized, and a connecting wire or the like between the given code display light 481 and the circuit board 510 is eliminated, thereby saving space and cost, allowing a very compact construction to be formed in a very cost-effective manner.

According to some embodiments, the master control module 500 is configured to provide a preset set of secret codes. More specifically, at the beginning of each game session, a preset set of secret codes is automatically provided by the main control module 500. In some embodiments, the main control module 500 may include a memory in which multiple topics, that is, multiple preset set of secret codes, may be stored. More specifically, a plurality of topics can be stored divided according to different game modes, that is, the topics can be stored corresponding to game modes, more specifically corresponding to game levels or game links, so that when a certain game mode is enabled, the corresponding topic, that is, the preset set of secret codes can be retrieved corresponding to the game links or game levels. In other embodiments, the main control module 500 is configured to randomly generate a preset set of secret codes.

According to some embodiments, as shown in FIG. 1, the code input module 300 is configured to select a given code as the solution code, and to input the selected given code as the solution code to the decryptor device, more specifically to the main control module 500. In some embodiments, the code input module 300 may include a code selection unit 310 configured to select a given code from a given set of codes as a solution code, and a code input unit 320 configured to input the selected given code as the solution code into the decryptor device. More specifically, the code input unit 300 may be configured to communicate with the main control module 500, and the main control module 500 may be configured to control the corresponding display unit 401 to display the input solution code in response to the operation of the code input unit 300. More specifically, the code input module 300 is configured to select and input each solution code in sequence when inputting a solution code set.

In some embodiments, as shown in FIG. 1, the code selection unit 310 may include or be implemented as a knob, and the knob may be configured to include multiple gears, each gear corresponding to a given code, and when turned to the corresponding When the gear is turned, the given code corresponding to the gear can be selected. In some embodiments, the display unit 401 is configured to operate in association with the knob, so that when the knob switches between various gears, the corresponding display unit 401 synchronously displays the solution code corresponding to each gear. More specifically, the knob as the code selection unit 310 can be set to be communicatively connected with the main control module 500, wherein the main control module 500 can be configured to control the corresponding display unit 401 to synchronously display in response to the knob switching between gears. Solution codes corresponding to each gear, thereby informing the user in an intuitive and clear manner what the current options are.

In some embodiments, the code input module 300 is also configured to input a preset set of secret codes. More specifically, the preset set of secret codes is input to the decryptor device 10 through the code input module 300, more specifically to the main control module 500. According to some embodiments, the decryptor device 10 may be configured such that each game session includes a questioning sub-phase and an answering sub-phase. More specifically, after each game session starts, the questioning sub-phase is performed first, and then the answering sub-phase is performed. In some embodiments, the code input module 300 and the display module 400 are configured to communicate with the main control module 500. In the questioning sub-phase, the code input module is configured to input the preset set of secret codes into the main control module 500; in the answering sub-phase, the code input module 300 is configured to input the solution code set to the main control module 500, and the main control module 500 is configured to control the display module 400 to display the input solution code in response to the operation of the code input module 300 to input the solution code. In some embodiments, the code input module 300 may include a code selection unit 310 and a code input unit 320. In the questioning sub-phase, the code selection unit 310 is configured to select a given code from a given code set as a secret code, and the code input unit 320 is configured to input the selected given code as a secret code into the main control module 500; in the answering sub-phase, the code selection unit 310 is configured to select a given code from a given code set as a solution code, and the code input unit 320 is configured to input the selected given code as a solution code into the main control module 500. More specifically, the code input unit 320 is configured to be communicatively connected with the main control module 500. In the answering sub-phase, the main control module 500 can be configured to respond to the operation of the code input unit 300, more specifically to respond to the solution code of the code input unit 300 Input operation controls the corresponding display unit 401 to display the input solution code. In some embodiments, the code selection unit 310 may include or be implemented as a knob, and the knob may include a plurality of gears, each gear corresponding to a given code, and when turned to the corresponding gear, the given code corresponding to the gear can be selected. More specifically, the knob can be set to be communicatively connected with the main control module 500, so that at least in the answering sub-phase, the main control module 500 can be configured to control the corresponding display unit 401 to synchronously display the solution code corresponding to each gear in response to the knob switching between various gears.

In some embodiments, as shown in FIG. 1, the code input unit 320 as described in any of the above embodiments may be configured to include or be implemented as buttons.

In some embodiments, as shown in FIG. 1, the code selection unit 310 and the code input unit 320 as described in any of the above embodiments are integrated with each other as a single module. More specifically, the knob as the code selection unit 310 and the button as the code input unit 320 are integrally provided, and more specifically, the knob may be provided around the button. This allows the code entry module to be implemented in a compact structure. In some embodiments, as shown in FIG. 1, the decryptor device 10 may comprise only one code input module 300 comprising one knob as the code selection unit 310 and one button as the code input unit 320. In other embodiments, the code input module 300 may be configured as a touch screen, thereby allowing the user to input the solution code in a touch manner. In some embodiments, the above-mentioned answer submitter 700 may be configured to be shared with the code input unit 320.

In some embodiments, as shown in FIG. 1, the code input module 300 as described in any of the above embodiments is located at a corner of the housing 100, such as the lower right corner or the lower left corner or the upper right corner, which facilitates the user to input the solution code, and does not prevent the user from observing the solution code displayed on the setting display unit 401 and/or the comparison result indication provided by the answer result indication module while inputting the solution code.

According to some embodiments, the decryptor device 10 is further configured to be able to provide an input digit indication regarding the input position of the solution code to be entered to indicate which digit of the corresponding set of solution codes the solution code to be entered is. This is particularly applicable when the preset set of secret codes includes a positional sequential relationship between multiple secret codes.

In some embodiments, the plurality of display units 401 in each set of display units 410, 420, 430, 440, 450, 460, 470 are positioned sequentially such that the positional sequential relationships between the plurality of display units 401 in each set of display units 410, 420, 430, 440, 450, 460, 470 may reflect or present the positional sequential relationships between the plurality of solution codes of the solution code set. More specifically, each display unit 401 in a set of display units 410, 420, 430, 440, 450, 460, 470 corresponds to the solution code position of the corresponding digit in the solution code set, for example, as schematically shown in FIG. 5 Shows that a set of display units 410, 420, 430, 440, 450, 460, 470 may include a first display unit 401a, a second display unit 401b, a third display unit 401c and a fourth display unit 401d arranged in sequence, then the input solution code displayed by the first display unit 401a may be the first solution code in the corresponding solution code set, and similarly, the input solution code displayed by the second display unit 401b may be the second solution code in the corresponding solution code combination, and so on. Thus, the corresponding solution code input digit indication may be provided by indicating the position of the corresponding display unit 401 of the set of display units 410, 420, 430, 440, 450, 460, 470 to indicate which digit of the corresponding set of solution codes the solution code to be input is.

In some embodiments, the display unit 401 of the set of display units 410, 420, 430, 440, 450, 460, 470 is further configured to provide a solution code input digit indication to indicate which digit of the corresponding solution code set the solution code to be input is. In some embodiments, the solution code input digit indication is provided by at least one of the colors, brightness, pattern, and blinking pattern of the display light element 402 of the corresponding display unit 401. Exemplarily and not exclusively, a corresponding display unit 401 of a set of display units 410, 420, 430, 440, 450, 460, 470 may be configured to provide a solution code input position indication by emitting white light or flashing, etc. More specifically, the display unit 401 is configured such that the operating state when displaying the solution code is different from the operating state when displaying the solution code input digit indication, thereby facilitating the user to distinguish different indication information. This allows explicit solution code entry guidance to the user, telling the user which solution code to enter now in an intuitive manner. Furthermore, this allows more functionality to be achieved with a reduced number of components, promoting overall construction compactness and further improving cost effectiveness while further enhancing human-machine interactivity.

In some embodiments, the above-mentioned first indicator light unit 610 is also configured to provide a solution code input digit indication to indicate which digit of the solution code to be input is in the corresponding solution code set. In some embodiments, the first indicator light unit 610 is configured to provide a solution code input digit indication through at least one of color, brightness, pattern, and blinking pattern. More specifically, the first indicator light unit 610 is configured to operate in a different state when the comparison result indication is provided from the operation state when the solution code input digit indication is provided, thereby facilitating the user to distinguish different indication information. In some embodiments, the comparison result indication and the solution code input digit indication are distinguished by at least one difference in color, pattern, brightness, or flashing pattern displayed by the corresponding first indicator light unit 610. This allows the user to be given explicit solution code entry guidance to tell the user which solution code to enter now in an intuitive manner. Furthermore, this allows more functionality to be achieved with a reduced number of components, promoting overall construction compactness and further improving cost effectiveness while further enhancing human-machine interactivity.

In some embodiments, the main control module 500 may be configured to automatically activate the input of the next solution code after each input of a solution code in the solution code set before completing the input of a solution code set. Here, "activating the input of the next solution code" means allowing the user to input the next solution code. More specifically, "next digit" refers to the immediately next digit.

In some embodiments, the main control module 500 is configured to automatically activate or enable the corresponding first indicator light unit 610 to provide the solution code input digit indication after each input of a solution code in the solution code combination before completing the input of a solution code set. More specifically, the first indicator light unit 610 set corresponding to the next display unit is automatically activated or enabled to provide the solution code input digit indication, which allows the first indicator light unit 610 to guide the user's solution code input operation.

In some embodiments, the decryptor device 10 may further comprise a solution code input digit indication module configured to provide a solution code input digit indication to indicate which digit of the corresponding set of solution codes the solution code to be input is. In some embodiments, the solution code input digits indicate that the module is configured to be held by housing 100. More specifically, the solution code input digits indicate that the module is configured to be electrically connected to the power supply module 200 to be powered by the power supply module 200. In some embodiments, the solution code input digit indication module may include a digit indicator light unit provided corresponding to each display unit 401, and each digit indicator light unit may include one or more digit indicator light elements. Exemplarily and not exclusively, the digit indicator light element may be an LED light. In some embodiments, the color, brightness, and blinking pattern of the digit indicator light elements are variable to provide solution code input digit indications. In some embodiments, digit indicator light elements are configured to be independently operable with respect to other digit indicator light elements. In some embodiments, the solution code input digit indication module is configured to provide the solution code input digit indication by indicating at least one of a color, a brightness, a pattern, a blinking pattern of the indicator light elements. In one embodiment, the digit indicator light units are disposed adjacent the corresponding display unit 401. More specifically, the digit indicator light units may be disposed above or below or alongside the corresponding display unit 401. According to some embodiments, the digit indicator light elements are provided on the circuit board 510 of the main control module 500, thereby allowing the space inside the decryptor device 10 to be fully utilized and eliminating connecting wires or the like between the digit indicator light elements and the circuit board 510, thereby saving space and cost, allowing a very compact construction to be formed in a very cost-effective manner.

In some embodiments, the main control module 500 is configured to automatically activate or enable the solution code input digit indication module to provide a solution code input digit indication after each entry of one solution code in the combination of solution codes before completing the entry of a set of solution codes.

In some embodiments, as shown in FIG. 1, the decryptor device 10 may further comprise a digit selector 350 configured to select an input digit of the solution code to be input, the input digit indicating which digit of the corresponding set of solution codes the solution code to be input is in. More specifically, the decryptor device 10 is arranged such that, when the digit selector 350 operates to select an input digit of the solution code to be input, the input of the digit solution code is activated, i.e., the input of the digit solution code is allowed at this time. The digit selector 350 is configured to allow the user to freely select which digit of a set of solution codes can be entered.

In some embodiments, the digit selector 350 is configured to select an input digit of the solution code to be entered by activating the display element 401 of the corresponding set of display elements 410, 420, 430, 440, 450, 460, 470. More specifically, the plurality of display units 401 of each set of display units 410, 420, 430, 440, 450, 460, 470 are sequentially positioned such that the positional sequential relationship between the plurality of display units of each set of display units reflects the positional sequential relationship between the plurality of solution codes of the solution code set. In this case, since the display units 401 operate in association with the code input module 300, when a certain display unit 401 is activated, the solution code of the digit corresponding to the display unit 401 is selected, thereby allowing the input of the solution code of the digit. This allows the user to select the input digits intuitively. More specifically, the digit selector 350 may be provided in communication connection with the main control module 500, and the main control module 500 is configured to activate the input of the solution code of the corresponding digit in response to the input digit selection operation of the digit selector 350. More specifically, the code input module 300 is configured to operate in association with the activated display unit 401, so that when the solution code is input using the code input module 300, the activated display unit 401 displays the input solution code, or the input solution code Overwrite the solution code previously displayed by the activated display unit 401. In the latter case, the solution code is reset, allowing the user to freely change the solution code that has been input, adjust the answer and answer, and improve the fun of the game. In some embodiments, the digit selector 350 may be provided as a knob or button or key or touch unit. In some embodiments the decryptor device 10 may comprise only one digit selector 350 which is operable to select either display unit 401. According to some embodiments, the digit selector 350 may be provided in common with at least part of the code input module 300 described above; more specifically, the digit selector 350 may be provided in common with the above-mentioned code input unit 320. Alternatively, the decryptor device 10 may include a digit selector provided corresponding to each display unit 401, so that when the digit selector is operated, the display unit 401 corresponding to the digit selector is activated or deactivated.

According to some embodiments, the first indicator light unit 610 may be set to operate in association with the digit selector 350, so that the main control module 500 may control the first indicator light unit 610 set corresponding to the display unit 401 to provide the solution code input digit indication in response to the digit selector 350 operating to activate the corresponding display unit 401.

According to some embodiments, the solution code input digit indication module may be configured to operate in association with the digit selector 350, so that the main control module 500 may control the digit indicator light unit configured corresponding to the display unit 401 to provide the solution code input digit indication in response to the digit selector 350 operating to activate the corresponding display unit 401.

In some embodiments, as exemplarily shown in FIG. 1, the decryptor device 10 may further include a display screen 20, which is configured to be electrically connected to the power supply module 200 to be powered by the power supply module 200. The display screen 20 may be configured to communicate with the main control module 500. The display screen 20 may be provided on the housing 100 to be held by the housing 100. According to some embodiments, the display screen 20 is configured to display at least one of the following information: game mode; game level; game levels; play time, i.e., the time the current game session has been played or how much time remains; number of consecutive customs passes; a given set of codes; and the like.

In some embodiments, the decryptor device 10 may further include a touch screen configured to implement at least one of the following: game mode selection; game difficulty level selection; game level selection; game hint selection; and the like. The touch screen can be configured to communicate with the main control module 500.

According to some embodiments, the decryptor device 10 is configured to include a plurality of game modes. Exemplarily, according to game difficulty, the plurality of game modes may include the above-mentioned simple mode and expert mode; furthermore, in each of the simple mode and the expert mode, the decryptor device 10 may be further subdivided into a plurality of game levels according to different difficulty levels, and each game level may further include one or more game levels. A game level may correspond to a game link as described above. In some embodiments, the game mode may include a single-player game mode, a man-machine battle game mode, a multiplayer battle game mode, etc. according to the game participants. In some embodiments, decryptor device 10 may also include a wireless transmission and reception module or a wired transmission and reception module. In some embodiments, the decryptor device 10 may further comprise one or more game mode selectors for selecting a game mode. In some embodiments, the decryptor device 10 may further comprise a game level selector for selecting a game level. In some embodiments, the decryptor device 10 may further comprise a game level selector for selecting a game level.

In some embodiments, the preset set of secret codes may include a 2-8 digit secret code. The decryptor device 10 may be configured to have different game modes according to the number of secret codes included in the preset set of secret codes. Exemplarily, the decryptor device 10 may include a 2-digit secret code game mode, a 3-digit secret code game mode, a 4-digit secret code game mode, a 5-digit secret code game mode, a 6-digit secret code game mode, a 7-digit secret code game mode and an 8-digit secret code game mode, and the decryptor device 10 is configured to be switchable between these different game modes to activate or enable the corresponding game mode. According to some embodiments, according to different game modes, the number of operable display units 401 in each set of display units 410, 420, 430, 440, 450, 460, 470 of the display module 400 changes accordingly. For example, in a 2-digit secret code game mode, only 2 display units 401 in each set of display units are operable; in the 4-digit secret code game mode, only 4 display units 401 in each set of display units are operable; and the like. In other words, each set of display units 410, 420, 430, 440, 450, 460, 470 is arranged such that all or some of the display units of the set are operable, but not necessarily all display units, depending on the corresponding game mode. More specifically, the main control module 500 is configured to activate the display unit 401 operable in each set of display units according to the game mode. Similarly, the main control module 500 can also be configured to enable all or part of the first indicator light unit 610 and/or the second indicator light unit 620 and/or the digit indicator light element and/or the given code display light 481 corresponding to each set of display units according to the game mode.

In some embodiments, the decryptor device 10 may further include a sound-emitting module, which is configured to be electrically connected to the power supply module 200 to be powered by the power supply module 200 and is configured to be communicatively connected to the main control module 500 to provide sound prompts. In some embodiments, the sound prompt includes at least one of the following prompts: a power on/off prompt; game mode tips; customs clearance prompts; solution code set correct prompt; solution code collection error tips; operation error prompt; correctly answer the code prompt; and the like.

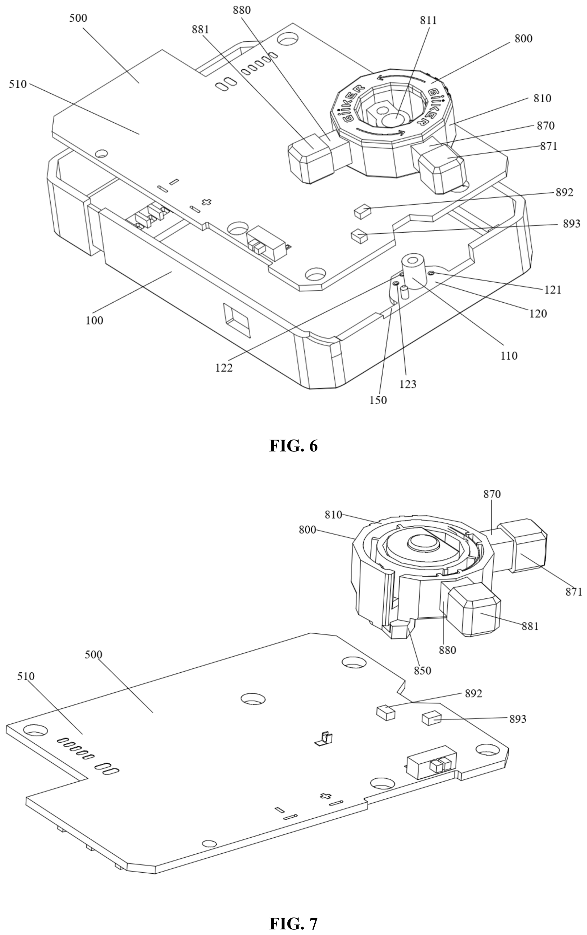

According to another aspect, as shown in FIGS. 6-12, the present disclosure also proposes a selector 800. The selector 800 may be used, for example, in a gaming machine that includes multiple game states or modes for game state or mode selection. According to some embodiments, the selector 800 may be configured to be rotatable relative to the housing 100 of the gaming machine, and more particularly configured to be rotatable relative to the housing 100 between at least two functional positions, each of which may correspond to a state (e.g., off, on) or a game mode of the gaming machine.

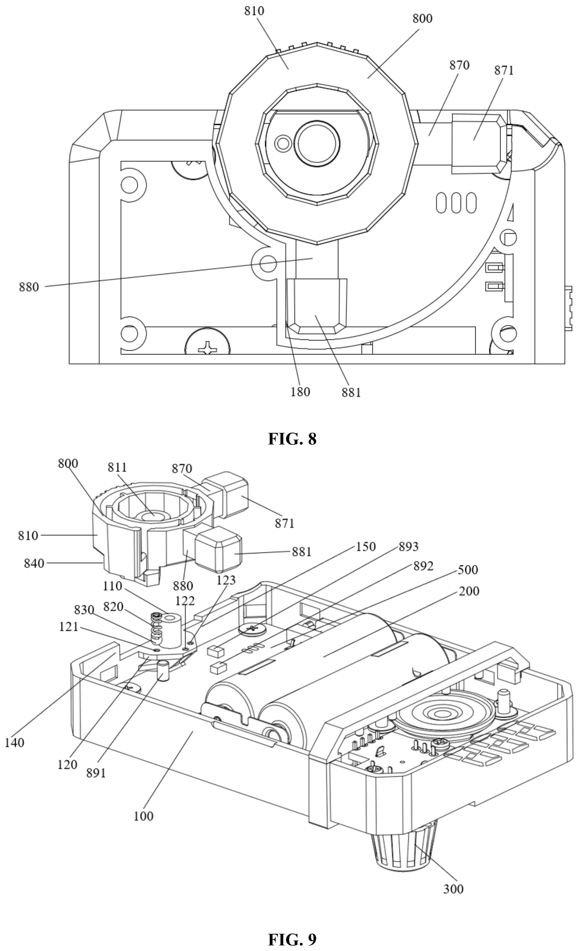

In some embodiments, the selector 800 may include a knob member 810 configured to be rotatable relative to the housing 100 between at least two functional positions. In an exemplary embodiment, as shown in FIGS. 9-10, the housing 100 is provided with one of the mounting shaft 110 or the mounting hole, and the knob member 810 may be provided with the other of the mounting shaft or the mounting hole 811. The knob member 810 is rotatably provided on the housing 100 via cooperation between the mounting shaft 110 and the mounting hole 811. According to some embodiments, selector 800 may further include a positioning structure for positioning knob member 810 in various positions. In some embodiments, the positioning structure may include an elastic member 820 connected to the knob member 810 and a positioning member 830 connected to the elastic member 820, and the elastic member 820 is configured to be connected to the knob member 810 and the positioning member 830 respectively at two ends opposite to each other. The positioning member 830 is optionally integrally provided with the elastic member 820. The elastic member 820 is exemplarily a compressible spring. The housing 100 of the game machine may be provided with a mating positioning structure that cooperates with the positioning member 830. According to one embodiment, as shown in FIGS. 9-10, the mating positioning structure includes a positioning plate 120, and at least two positioning recesses 121, 122, 123 may be provided on the positioning plate 120, and each positioning recess 121, 122, 123 corresponds to a functional position setting of the selector 800. More specifically, when the knob member 810 is in a certain functional position, the positioning member 830 is located in the corresponding positioning recess 121, 122, and 123. More specifically, when the knob member 810 is not in any functional position, the positioning member 830 abuts the positioning plate 120 and the elastic member 820 is compressed between the positioning member 830 and the knob member 810; as the knob member 810 rotates, the knob member 810 rotates together with the positioning member 830 with the elastic member 820. When rotated to the functional position, as the positioning member 830 moves to the positioning recess 121, 122, 123, the elastic member 820 exerts a certain elastic actuating force to press the positioning member 830 in the positioning recess 121, 122, 123, thereby giving a tactile sensation to the user so that the user knows that the knob member 810 is now in the functional position, and the knob member 810 can be positioned in the functional position. In a specific embodiment, as shown in FIGS. 1-11, the positioning member 830 is configured as a spherical member, such as a steel ball.

According to some embodiments, the selector 800 is also provided with a functional position identifier connected to the knob 810 to be movable therewith and configured to provide a functional position indication regarding the functional position to allow the user to figure out which functional position is currently in.

In some embodiments, as shown in FIGS. 7, 9 and 10, the knob member 810 may also be provided with a first limiting part 840 and a second limiting part 850, the first limiting part 840 and the second limiting part 850 It is configured to respectively define the first rotation end position and the second rotation end position of the knob member 810, and the first rotation end position and the second rotation end position respectively correspond to a functional position. The knob member 810 is configured to be rotatable between a first rotation end position and a second rotation end position. More specifically, the housing 100 is also provided with a first mating limiting part 140 and a second mating limiting part 150 respectively, which cooperate with the first limiting part 840 and the second limiting part 850 respectively to achieve limiting. According to one embodiment, the first limiting portion 840 and the second limiting portion 850 are each configured as protrusions of the knob member 810.

In some embodiments, the knob member 810 may be configured to be rotatable relative to the housing 100 between three functional positions: an off position, a first game mode position, and a second game mode. More specifically, the positioning plate 120 of the housing 100 may be provided with a first positioning recess 121 corresponding to the shutdown position, a second positioning recess 122 corresponding to the first game mode, and a third positioning recess 123 corresponding to the third game mode. In the shutdown position, the above-mentioned positioning member 830 is received in the first positioning recess 121; in the first game mode position, the positioning member 830 is received in the second positioning recess 122; in the second game mode position, the positioning member 830 is received in the third positioning recess 123.

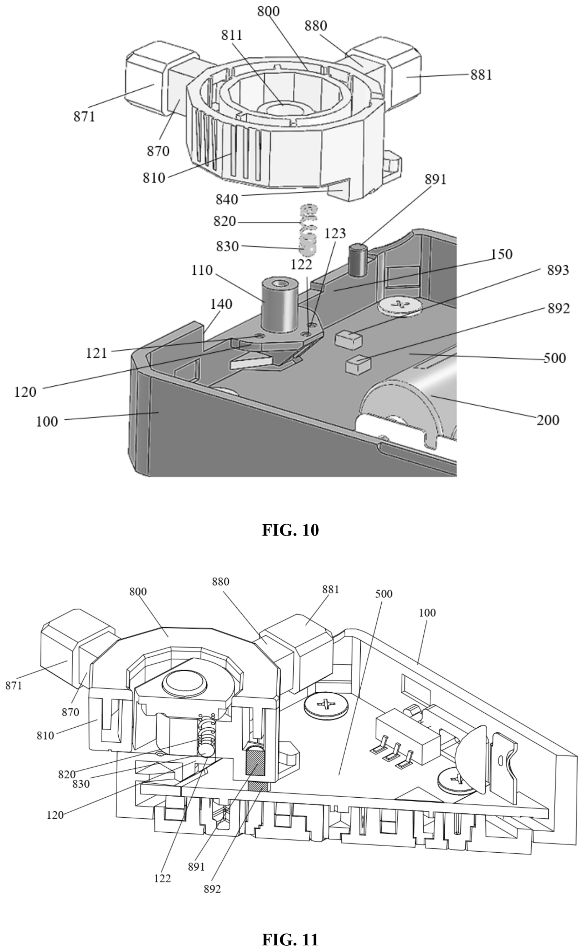

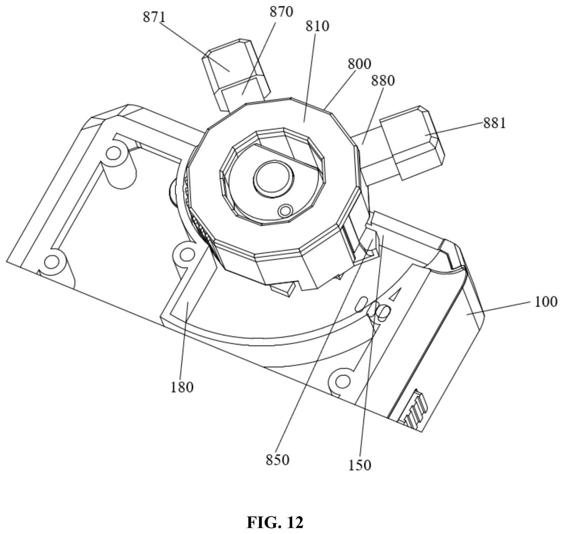

In some embodiments, as shown in FIGS. 6-12, the functional position identifier includes a first arm 870 and a second arm 880 connected to the knob member 810 and protruding relative to the knob member 810 and capable of rotating with the knob member 810. According to one embodiment, when the knob member 810 is in the shutdown position, as shown in FIGS. 8-9, the first arm 870 and the second arm 870 are stored or hidden inside the housing 100, thereby indicating that the shutdown state is currently present; when knob member 810 is in the first game mode position, as shown in FIGS. 10-11, first arm 870 extends out of housing 100, thereby indicating that the first game mode is present; according to a specific embodiment, the first game mode may be a battle mode or a single-player game mode, whereby only the extension of the first arm 870 out of the housing 100 may indicate the current game mode in an intuitive manner; when knob member 810 is in the second game mode position, as shown in FIG. 12, both first arm 870 and second arm 880 extend out of housing 100, thereby indicating that the second game mode is present; according to a specific embodiment, the second game mode may be an everyone battle mode, whereby the current game mode is indicated in an intuitive manner by both arms extending out of the housing 100. In some embodiments, as shown in FIGS. 6-12, the first arm 870 and the second arm 880 may be provided with indicators, which may also be used to indicate the status or game mode. More specifically, the indication part may be provided as signal lights 871, 881, and the status of the signal lights 871, 881 may be used to indicate the game status or mode. More specifically, the signal lights 871, 881 may operate independently of each other and their color, brightness, flashing pattern, etc. may be changed to provide corresponding indication information. Illustratively, when the knob member 810 is in the first game mode position, the signal light 871 on the first arm 870 is illuminated; when the knob member 810 is in the second game mode position, the signal lights 871, 881 on both the first arm 870 and the second arm 880 are illuminated. Exemplarily, the signal lights 871 and 881 can also be set to indicate the current game status. For example, if the signal lights 871 and 881 display yellow, it means that it is currently in the questioning sub-phase; if the signal lights 871 and 881 display blue, it means that it is currently in the answering sub-phase; if the signal lights 871 and 881 display green, it means that the corresponding side wins; if the signal lights 871 and 881 display red, it means that the corresponding party has failed. In some embodiments, the signal lights 871, 881 are provided in communication connection with the main control module 500 to be controllable by the main control module 500.

In some embodiments, the selector 800 may also include a functional position sensing component configured to generate a sensing signal that can be transmitted to the main control module 500 of the gaming machine so that the main control module 500 can activate a corresponding game state or mode based on whether the sensing signal is received or when a corresponding sensing signal is received. According to some embodiments, the functional position sensing assembly may include a first inductor and a second inductor disposed at the at least one functional position, the first inductor and the second inductor being capable of sensing each other to generate a sensing signal. The first induction member is configured to rotate with the knob member 810, so that when the knob member 810 is in a certain functional position where the second induction member is disposed, the first induction member can interact with the second induction member in the functional position. And generate an induction signal. In some embodiments, as shown in FIGS. 9-11, the first inductive member is provided as a magnet 891 fixed relative to the knob member 810, and the second inductive member includes a first Hall magnetic sensor 892 and a second Hall magnetic sensor 893 disposed at a first game mode position and a second game mode position, respectively. Therefore, when the knob member 810 is in the shutdown position, the magnet 891 cannot interact with the first Hall magnetic sensor 892 or the second Hall magnetic sensor 893 so no sensing signal is generated, and the main control module 500 is configured to place the decryption device 10 in the shutdown state at this time; when the knob member 810 is in the first game mode position, the magnet 891 can interact with the first Hall magnetic sensor 892 in the first functional position to generate a first sensing signal, and the main control module 500 controls the decryption device 10 to enter the first game mode based on the reception of the first sensing signal; when the knob member 810 is in the second game mode position, the magnet 891 can interact with the second Hall magnetic sensor 893 in the second functional position to generate a second sensing signal, and the main control module 500 controls the decryption device 10 to enter the second game mode based on the reception of the second sensing signal. According to some embodiments, the second induction element may be directly disposed on the circuit board 510 of the main control module 500.

According to some embodiments, in the shutdown position, as shown in FIG. 8, the second arm 880 is configured to abut the retaining portion 180 on the housing 100, thereby further ensuring that the knob member 810 is stably maintained in the shutdown position.

According to some embodiments, the decryptor device 10 may comprise the selector 800 described above. It should be noted that although the above selector 800 proposed by the present disclosure is proposed in conjunction with the decryptor device 10 proposed by the present disclosure, it is obvious that the selector 800 can be applied to mode selection of any device, as long as there is no technical obstacle.

According to yet another aspect, the present disclosure also proposes a display device, more specifically a display device for a decryptor device 10 according to any one of the above embodiments. The display device is configured to avoid visual fatigue of the user without causing any damage to the user's eyes even if the display device is used for a long time. As shown in FIGS. 2-3 and 4b, according to some embodiments, a display device includes a light processing part 900 and a light emitting component. The light-emitting member may include a plurality of light-emitting units, and each light-emitting unit may further include one or more light-emitting elements. In a specific embodiment, the light-emitting element is a light element, such as an LED. In some embodiments, the color, brightness, and blinking pattern of the light elements are variable. More specifically, the light elements are configured to be operable independently of each other. The light processing element is configured to process the light emitted by the light emitting element and present desired display content. In some embodiments, the light processing part 900 includes a light-shielding part and a light-transmitting part, the light-shielding part is configured to not transmit light, and the light-transmitting part is configured to transmit light. The light-shielding part and the light-transmitting part cooperate together to control the display content that can be presented by the light emitted by the light-emitting part through the processing of the light processing part 900. The display content is, for example, a pattern, and the pattern includes rectangles of different sizes, squares of different sizes, circles, triangles, hexagons or other patterns of arbitrary shapes. In some embodiments, the light-transmitting portion may be provided as a material hollowing portion; alternatively, the light-transmitting part may be provided in the form of a light-transmitting plate, for example an at least translucent white plate.

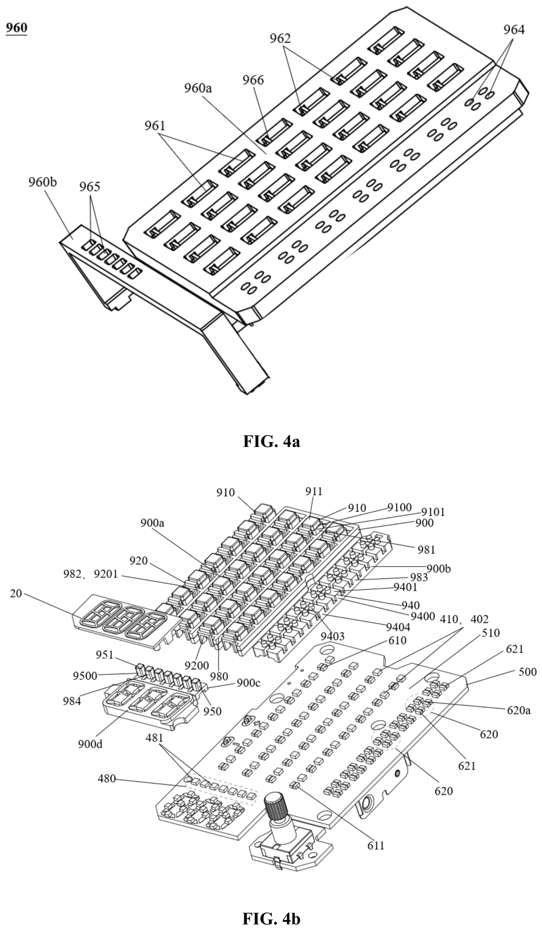

In some embodiments, as shown in FIG. 4b, a light processing unit 910, 920, 940, 950 is provided for each light emitting unit, and one light processing unit 910, 920, 940, 950 includes a light transmitting part 911, 921, 941, 951 and a light shielding part 981, 982, 983, 984. In some embodiments, the light processing part 900 may include light management units 910, 920, 940, 950 having different configurations, for example, to allow different display content, such as display patterns or shapes, to be presented through the use of differently configured light management units 910, 920, 940, 950. In some embodiments, the plurality of light processing units 910, 920, 940, 950 may be formed as one integral piece; more specifically, the light processing part 900 may be provided as a unitary piece; more specifically, the plurality of light processing units 910, 920, 940, 950 of the light processing part 900 are maintained as an integral piece via a connection frame 980, which is also provided as a light shielding member, and therefore may be called a light shielding connection frame. In some embodiments, the light processing units 910, 920, 940, 950 may be provided separately from each other.

In some embodiments, as shown in FIGS. 1-3 and 4a, the display device is further provided with a retaining plate 960, which is configured to at least hold the light processing part 900, and optionally also play a certain protective role for the light processing part 900. According to some embodiments, as shown in FIGS. 2 and 4a, the retaining plate 960 may be provided as a single piece. Alternatively, the retaining plate 960 may include multiple portions that are separate from each other. According to some embodiments, as shown in FIG. 4a, the retaining plate 960 may be provided with mounting holes 961, 962, 964, 965, more specifically mounting holes provided through the retaining plate 960. In some embodiments, as shown in FIGS. 1 and 3, the light-transmitting portions 911, 921, 941, 951 may be installed in corresponding mounting holes 961, 962, 964, 965 such that the light-transmitting portions 911, 921, 941, 951 An outward-facing surface is generally flush or slightly protruding relative to the outward-facing surface of the retaining plate 960.

According to some embodiments, as shown in FIG. 4b, each light processing unit 910, 920, 940, 950 may include a protrusion mounting portion 9100, 9200, 9400, 9500, which may be protruding disposed with respect to at least a portion of the connecting frame 980 and/or at least a portion of the light shielding portion 981, 982, 983, 984, and a light transmitting portion 911, 921, 941, 951 is disposed at a free end of the protrusion mounting portion 9100, 9200, 9400, 9500 to enable the protrusion mounting portion 9100, 9200, 9400, 9500 to protrude into the corresponding mounting hole 961, 962, 964, 965 and at this time allow the light transmitting portion 911, 921, 941, 951 to present the corresponding display content at the mounting hole 961, 962, 964, 965. According to an embodiment, the protrusion mounting portions 9100, 9200, 9400, 9500 may be mounted in the corresponding mounting holes 961, 962, 964, 965 in an interference fit manner. According to one embodiment, the protrusion mounting portions 9100, 9200, 9400, 9500 may be snap-fitted to the corresponding mounting holes 961, 962, 964, 965. In some embodiments, as shown in FIG. 4b, the protrusion mounting portions 9100, 9200, 9400, and 9500 are provided with limiting structures 9101, 9201, 9401, and 9501, and the retaining plate 960 is provided with mating limiting structures, and the limiting structures 9101, 9201, 9401, and 9501 of the protrusion mounting portions 9100, 9200, 9400, and 9500 can cooperate with the mating limiting structures of the retaining plate 960 to limit the depth of insertion of the light-transmitting portions 911, 921, 941, and 951 into the mounting holes 961, 962, 964, and 965. According to one embodiment, as shown in FIG. 3, the protrusion mounting portions 9100, 9200, 9400, and 9500 include a hollow structure, and at least part of the peripheral walls of the protrusion mounting portions 9100, 9200, 9400, and 9500 are provided as the above-mentioned light shielding portions 981, 982, 983, 984; optionally, the light shielding parts 981, 982, 983, and 984 constitute the peripheral walls of the protrusion mounting parts 9100, 9200, 9400, and 9500. In some embodiments, the peripheral walls 9100, 9200, 9400, 9500 of the protrusion mounting portion are disposed around the corresponding light emitting unit. As shown in FIG. 4b, in some embodiments, one or more protrusion mounting portions 9500 include a first portion 9403 and a second portion 9404 that are integrated or connected together, wherein the light-transmitting portion 951 is disposed at the free end of the first portion 9403, the first portion 9403 is mounted into the corresponding mounting hole 965, and the second portion 9404 is disposed around the corresponding light-emitting unit.

According to some embodiments, as shown in FIGS. 1 and 4b, the light emitting component includes a display unit 401 according to any of the above embodiments of the decryptor device 10, and the light processing part 900 includes a light processing unit arranged corresponding to each display unit 401, called a first light processing unit 910. According to some embodiments, the first light processing unit 910 includes a protrusion mounting portion, referred to as a first protrusion mounting portion 9100, and a first light transmitting portion 911 is disposed on the first protrusion mounting portion 9100; the retaining plate 960 includes a mounting hole for mounting the first protrusion mounting portion 9100, referred to as a first mounting hole 961. The first light-transmitting part 911 extends into the first mounting hole 961. More specifically, the first light-transmitting part 911 is disposed substantially flush or slightly protruding relative to the outer surface of the retaining plate 960.

According to some embodiments, as shown in FIG. 1 and FIG. 4b, the light emitting component includes the first indicator light unit 610 according to any of the above embodiments of the decryptor device 10, and the light processing part 900 includes a light processing unit corresponding to each first indicator light unit 610, called a second light processing unit 920. According to some embodiments, the second light processing unit 920 includes a protrusion mounting portion, called a second protrusion mounting portion 9200, and the second light transmitting portion 921 is disposed on the second protrusion mounting portion 9200; the retaining plate 960 includes a mounting hole for mounting the second protrusion mounting portion 9200, referred to as a second mounting hole 962. The second light-transmitting part 921 extends into the second mounting hole 962. More specifically, the second light-transmitting part 921 is disposed substantially flush or slightly protruding relative to the outer surface of the retaining plate 960. In some embodiments, as shown in FIGS. 3 and 4b, the first indicator light unit 610 is disposed near the corresponding display unit 401. In this case, the second mounting hole 962 and the corresponding first mounting hole 961 may be separated from each other via a relatively thin partition plate 966.

According to some embodiments, as shown in FIG. 1 and FIG. 4b, the light emitting component includes the second indicator light unit 620 according to any of the above embodiments of the decryptor device 10, and the light processing part 900 includes a light processing unit provided corresponding to each second indicator light unit 620, which is called a third light processing unit. According to some embodiments, the third light processing unit includes a protrusion mounting portion, referred to as a third protrusion mounting portion, and the third light transmitting portion is disposed on the third protrusion mounting portion; the retaining plate 960 includes a mounting hole for mounting the third protrusion mounting portion, which is called a third mounting hole. The third light-transmitting part extends into the third mounting hole, and more specifically, the third light-transmitting part is disposed substantially flush or slightly protruding relative to the outer surface of the retaining plate. According to other embodiments, the light processing part 900 includes a light processing unit, referred to as a fourth light processing unit 940, provided corresponding to each sub-unit 620a of the second indicator light unit 620. According to some embodiments, the fourth light processing unit 940 includes a protrusion mounting portion, called a fourth protrusion mounting portion 9400, and a fourth light-transmitting portion 941 is disposed on the fourth protrusion mounting portion 9400; the retaining plate 960 includes a mounting hole, referred to as a fourth mounting hole 964, for mounting the fourth protrusion mounting portion 9400. The fourth light-transmitting part 941 extends into the fourth mounting hole 964. More specifically, the fourth light-transmitting part 941 is disposed substantially flush or slightly protruding relative to the outer surface of the retaining plate 960.

According to some embodiments, as shown in FIGS. 1 and 4b, the lighting component includes a given code display light 481 according to any of the above embodiments of the decryptor device 10, and the light processing part 900 includes a light processing unit arranged corresponding to each given code display light 481, called a fifth light processing unit 950. According to some embodiments, the fifth light processing unit 950 includes a protrusion mounting portion, called a fifth protrusion mounting portion 9500, and the fifth light transmitting portion 951 is disposed on the fifth protrusion mounting portion 9500; the retaining plate 960 includes a mounting hole, referred to as a fifth mounting hole 965, for mounting the fifth protrusion mounting portion 9600. The fifth light-transmitting part 951 extends into the fifth mounting hole 965. More specifically, the fifth light-transmitting part 951 is disposed substantially flush or slightly protruding relative to the outer surface of the retaining plate 960.

According to some embodiments, as shown in FIGS. 1 and 4b, at least two of the first 910, second 920, third 940 and fifth 950 light processing units are configured differently from each other to present different display patterns. This allows users to intuitively access a variety of different display information, enhancing user experience satisfaction.

According to some embodiments, as shown in FIG. 4b, the retaining plate 960 includes a first retaining plate part 960a in which a plurality of first mounting holes 961 and a plurality of second mounting holes 962 and a plurality of third mounting holes or a plurality of fourth mounting holes 964 are provided, and a second retaining plate part 960b in which a plurality of fifth mounting holes 965 are provided. Optionally, the first retaining plate part 960a and the second retaining plate part 960b are provided separately from each other. According to some embodiments, the light processing part 900 includes a first light processing part 900a, which may include a plurality of first light treatment units 910 and a plurality of second light treatment units 920, a second light processing part 900b, which may include a plurality of third light treatment units or a plurality of fourth light treatment units 940, and a third light processing part 900c, which may include a plurality of fifth light treatment units 950. Optionally, the first light processing part 900a, the second light processing part 900b and the third light processing part 900c are provided separately from each other. Alternatively, the first light processing part 900a and the second light treatment portion 900b are provided as an integral piece.

According to some embodiments, as shown in FIG. 4b, the light processing part 900 further includes a light management element portion 900d arranged corresponding to the display screen 20 according to any of the above embodiments, referred to as a fourth light management element portion 900d. Optionally, the third light treatment portion 900c and the fourth light processing part 900d are provided as an integral piece.

According to some embodiments, as shown in FIG. 4b, the light-emitting component is disposed on the circuit board 510 of the main control module 500, and the connection frame 980 of the light processing part 900 can also be configured to be supported by the circuit board 510. More specifically, the protrusion mounting portions 9100, 9200, 9400, 9500 of the light processing units 910, 920, 940, 950 may be arranged with the ends of their peripheral walls disposed against the circuit board 510, so that the peripheral walls of the protrusion mounting portions 9100, 9200, 9400, 9500 are arranged around corresponding light emitting units.

According to some embodiments, as shown in FIG. 2, in embodiments where the display device is used in a decryptor device 10, the retaining plate 960 may be part of the housing 100 of the decryptor device 10, such as a cover plate of the housing 100. It should be noted that the display device proposed by the present disclosure is not limited to the decryptor device proposed by the present disclosure.

In some embodiments, as shown in FIG. 2, the housing 100 forms a receiving cavity. More specifically, the housing may include a housing frame 160, a cover plate 960, and a bottom cover 130. The cover plate 960 and the bottom cover 130 may be mounted to the housing frame 160. The housing 100 may surround a receiving cavity. Optionally, the above-mentioned display device may be disposed in the receiving cavity. Optionally, the above-mentioned main control module 500 is accommodated in the accommodation cavity. Optionally, the above-mentioned battery module 200 is accommodated in the accommodation cavity. Of course, some other components can be provided in the receiving cavity as desired.

According to some embodiments, the decryptor device 10 comprises the display device described above.

Exemplary embodiments of the decryptor device 10, the selector 800 and the display device proposed by the present invention have been described in detail with reference to the preferred embodiments. However, those skilled in the art will understand that without departing from the spirit of the present invention, various changes and modifications can be made to the above-described specific embodiments, and various technical features and structures proposed by the present invention can be variously combined without departing from the protection scope of the present invention.

The scope of the present disclosure is defined not by the above-described embodiments, but by the appended claims and their equivalents.

## Claims

1. A decryptor device configured for a user to answer a question, said question being a preset set of secret codes, said preset set of secret codes comprising a plurality of secret codes selected from a given set of codes, said given set of codes comprising a plurality of given codes that are different from each other, said decryptor device comprising:
a housing;
a power supply module;
a main control module electrically connected with the power supply module;
a code input module provided on the housing, the code input module being electrically connected to the power supply module and communicatively connected to the main control module, wherein the code input module is configured to at least input answers, and the answers being a set of solution codes, the number of solution codes included in the set of solution codes being the same as the number of the secret codes included in the preset set of secret codes, wherein the solution codes are selected from the given set of codes;
a display module provided on the housing, the display module being electrically connected to the power supply module and communicatively connected to the main control module, wherein the display module includes at least one set of display units, and wherein the display module is configured to, when the code input module being operated to input the answer, operate in association with the code input module so that each set of the display units displays a corresponding set of solution codes.

2. The decryptor device according to claim 1, wherein each set of display elements comprises a plurality of display elements, each display element comprising at least one display light element.

3. The decryptor device according to claim 2, wherein each display unit in each set of display units is configured to display a solution code.

4. The decryptor device according to any one of claims 1-3, wherein each of said preset set of secret codes comprises a positional sequential relationship between the plurality of secret codes.

5. The decryptor device according to any one of claims 1-4, wherein the display units in each set of display units are positioned sequentially such that a positional sequential relationship between the display units of each set of display units reflects a positional sequential relationship between the solution codes in the set of solution codes.

6. The decryptor device according to claim 1, wherein the code content of the given codes is represented by at least one of a color, a number, a letter, a word, or a pattern.

7. The decryptor device according to claim 2, wherein the display light element is provided on a circuit board of the main control module.

8. The decryptor device according to claim 1, wherein the main control module is configured to provide the preset set of secret codes.

9. The decryptor device according to claim 8, wherein the main control module is configured to control the display module to display the input solution codes in response to the code input module being operated to input the solution codes.

10. The decryptor device according to claim 9, wherein the code input module comprises:
a code selection unit configured to select a given code from the given set of codes as a solution code; and
a code input unit configured to input the selected given code to the main control module as a solution code.

11. The decryptor device according to claim 9, wherein the code input unit is configured to be communicatively connected with the main control module, and
wherein the main control module is configured to control the corresponding display unit to display the input solution code in response to the operation of the code input unit.

12. The decryptor device according to any one of claims 1-11, wherein the code input module is further configured to input the preset set of secret codes.

13. The decryptor device according to any one of claims 1-12, wherein the main control module is further configured to compare the input set of solution codes with the preset set of secret codes and output a comparison result.

14. The decryptor device according to any one of claims 1-13, wherein the display unit is further configured to provide a solution code input digit indication for indicating the solution code to be input is in which digit of the corresponding set of solution codes

15. The decryptor device according to any one of claims 1-14, wherein the decryptor device further comprises an answer submitter disposed on the housing and communicatively connected to the main control module, wherein the answer submitter is operable to submit the set of solution codes to the main control module.
